# EUROPEAN PATENT SPECIFICATION

(11) **EP 0 924 020 B1**
(45) Date of publication and mention of the grant of the patent: **06.02.2008**
(21) Application number: 98310527.1
(22) Date of filing: 21.12.1998
(51) Int. Cl.: B23K 20/02, B23K 9/04, B23K 37/06

(54) **Method and apparatus for applying material to a face of a flow directing assembly for a gas turbine engine**
Verfahren und Vorrichtung zum Auftragen von Materialen auf einer Strömungsleiteinrichtung eines Gasturbinentriebwerkes
Méthode et appareil pour l'apport de matière sur une surface d'un élément orientant l'écoulement d'une turbine à gaz

(30) Priority: 19.12.1997 US 994677; 19.12.1997 US 994678; 19.12.1997 US 994781
(43) Date of publication of application: 23.06.1999
(73) Proprietor: United Technologies Corporation, Hartford, CT 06101 (US)
(72) Inventor: Ittleson, Alan J., Middletown, Connecticut 06457 (US); Johnson, Jeffrey B., Wallingford, Connecticut 06492 (US); Dube, Bryan P., Wallingford, Connecticut 06492 (US); Bayer, Jeffrey J., Manchester, Connecticut 06040 (US); Bacon, Dennis J., Guilford, Connecticut 06437 (US); O'Brien, Jamie W., Wallingford, Connecticut 06492 (US)
(74) Representative: Leckey, David Herbert

(56) References cited:
- DE-A- 4 237 052
- DE-U- 8 909 840
- GB-A- 1 529 706
- US-A- 4 894 505
- ARDO BRÜCKNET ET AL.: "use of a robot for submerged-arc surfacing" WELDING INTERNATIONAL, vol. 1, no. 1987, pages 861-864, XP002141228 abington, cambridge, GB

## Description

This invention relates to axial flow rotary machines and more particularly to a method and apparatus for forming the face of a shroud on a used or partially formed rotor blade for such a machine.

Axial flow rotary machines, such as gas turbine engines used for the propulsion of aircraft, have rotor assemblies disposed within the engine. Each rotor assembly is used to transfer energy between the rotor assembly and gases flowed through the engine. The rotor assembly is commonly provided with rotor disks each having a plurality of rotor blades.

Each rotor blade typically has a root which adapts the blade to engage a corresponding groove in the disk for retention of the rotor blade. An airfoil extends outwardly from the root and has a convex side and a concave side for interacting with the working medium gases. The rotor blade may also be provided with a shroud, such as a tip shroud at the outer end of the airfoil. Each shroud has laterally (circumferentially) extending faces and axial extending faces. An example of an axially extending face is the notch face. The shroud extends circumferentially to engage the shroud of each of the adjacent rotor blades at the notch face.

During operation of the machine, the rotor blades in the turbine section extend outwardly across the working medium flow path. The rotor blades receive energy from the working medium flow path to drive the rotor assembly about its axis of rotation. In the compression section, the rotor blades transfer energy to the gases to compress the gases as the rotor blades are driven about the axis of rotation by the rotor assembly. As a result, the rotor blades and shrouds are subjected to fluctuating gas flows and high temperatures.

These fluctuating gas flows induce vibrations in the blades which are damped by sliding friction as the shrouds rub against each other. Such rubbing causes wear. The notch face of the shroud at the point of contact has a hard facing material to extend the life of the rubbing surfaces on new blades and is replaced on used blades after the notch becomes worn.

The present invention is concerned with a fixture and method for disposing shroud material, such as a weld material for hard facing a cross notch, on the substrate of a used rotor blade or on a new, rotor blade which is partially formed. Accordingly, the term "rotor blade" includes a partially formed rotor blade having a substrate that adapts the rotor blade shroud to receive such material, or is a used rotor blade having a portion of the shroud surface machined away to form a substrate prior to restoration of the rotor blade.

One method of providing hard facing material to a shroud is to melt hard face material at the notch face by passing an electrical current through the material, such as by welding. This results in a pool of molten material. The molten material is used to build up the thickness of material on the notch face as it hardens. Unfortunately, the pool of molten material coats the top of the shroud, coats the flow path surface beneath the shroud and extends radially past the notch face surface as it hardens.

It is relatively straight forward to remove the deposited material from the top of the shroud because this is not a flow path surface and is easily accessible during the rotor blade fabrication process. The underside of the shroud is a different matter because it includes hard face material protruding from the substrate and attached to the shroud. The protrusion adds weight to the shroud at a critical location and disrupts the aerodynamic smoothness of the flow path surface. The once molten material, now hardened into a lump of hard face material, is removed from the under side of the shroud to decrease rotational stresses in the shroud to acceptable levels and to form a surface having an acceptable aerodynamic smoothness.

One approach is to hand blend the weld material such as by use of a hand held belt sander or hand held surface grinder. Such work is time consuming, ergonomically undesirable and expensive. Machining is not an attractive alternative because of difficulty in locating a partially formed part, such as a rotor blade during manufacture, that has a substrate which receives the molten material. The typical method is to rigidly support the rotor blade for the machining operation by engaging the partially formed root of the rotor blade. A rotor blade with an unfinished root is difficult to locate using the root as a datum for the machining operation because the location of the shroud then has much variability in a locating fixture. Using a cast block datum around the airfoil is an alternative, but the block prevents access to the underside of the shroud and prevents removing material from the flow path surface located there.

DE-A-4 237 052 discloses a fixture for repair welding of turbine blades.

Accordingly, the Applicant's scientists and engineers have sought to develop a method and an apparatus for use with the shrouds rotor blades which decreases the difficulties associated with removing hard face material from the flow path surface of the rotor blade shroud.

This invention is in part predicated on the recognition that a very small amount of hard face material may be tolerated on the flow path surface of the shroud providing its mass and its roughness and any protrusion from the surface into the flow path are no greater than limits which are much smaller than the protrusion that presently results from depositing hard face material. For example, for typical rotor blades it was recognized that a protrusion is acceptable providing the protrusion is no greater than ten thousandths of an inch (.010") (.25mm) with a surface roughness Ra measurement of ninety to one-hundred and fifty microinches (2.3-3.8 x 10³ µm) as measured in accordance with the procedures set forth in specification "ANSI B46.1 - 1985 Surface Texture" available from the American National Standards Institute.

According to a first aspect of the present invention, the invention provides a method as claimed in claim 1. In a preferred embodiment, a method for forming a region of hardened material on the notch face location of a rotor blade includes melting hard face material at the notch face while urging a metal pad against the underside of the shroud to block the flow of molten material to the underside of the shroud.

In one embodiment of the method, the step of urging the pad against the shroud includes engaging the contour of the shroud with the contour of the pad.

The step of urging the pad against the shroud may include applying a force along a line of force to the pad at a first location and rotating the pad with respect to the line of force to orient the pad substantially parallel to the underside of the shroud.

The step of urging a pad against the flow path surface of the shroud may include urging the pad with a resilient force such that the pad resists movement away from engagement with the flow path surface of the shroud with a restorative force.

The step of urging a pad against the flow path surface of the shroud may include engaging the rotor blade outwardly of the root section of the rotor blade to orient the pad with respect to the flow path surface of the shroud

The step of engaging the rotor blade outwardly of the root section of the rotor blade to orient the pad with respect to the flow path surface of the shroud may include disposing support structure adjacent the rotor blade which engages the pad and engaging the shroud section of the rotor blade for supporting and positioning the pad from the shroud section.

Preferably, the method includes transferring heat from the molten material adjacent the pad at a greater rate than the material adjacent the shroud and the step of blocking the flow of molten material to the flow path surface of the shroud includes the step of increasing the viscosity of the molten material adjacent the faying surfaces of the pad and shroud by transferring the heat at a greater rate from that location.

The step of transferring heat preferably includes limiting the amount of heat transferred such that the pad does not act as a heat sink transferring too much heat out of the molten material and causing cracking of the molten material and heating the pad to a temperature which is less than one-third the melting point of the pad material.

The step of engaging the rotor blade with support structure preferably includes orienting the support structure for the pad such that the support structure does not extend laterally beyond the pad and does not extend radially a substantial distance between the platform of the blade and the flow path surface of the shroud.

The invention also extends to apparatus for carrying out the above method From a second aspect, therefore, the invention provides apparatus as claimed in claim 13. Thus a fixture for use in disposing material at a rotor shroud face location comprises a pad which engages the flow path surface of the shroud such that the pad blocks the flow of molten material to the flow side of the shroud.

In an embodiment of the present invention, a fixture for disposing a region of material at the shroud face location of a rotor blade has a pad which engages the flow path surface of the shroud and extends beyond the shroud such that the pad blocks the flow of molten material to the flow path surface of the shroud.

In a preferred embodiment, a fixture for disposing a region of hardened material at the notch face location of a rotor blade has an assembly for urging a pad into engagement with the flow path surface of the shroud such that the pad blocks the flow of molten material to the flow path surface, the assembly being supported and positioned from the rotor blade at a location that is not inwardly of the airfoil.

Preferably the assembly has a pair of jaws that are urged together to engage the rotor blade.

Preferably the first jaw has two spaced apart sides which engages a flow path surface on the shroud and the second jaw is disposed between the sides and engages the outer surface of the shroud.

Preferably, each side of the first jaw has an appendage that rotatably engages the jaw and is adjustable with respect to the shroud.

From a further aspect, the invention provides an apparatus as claimed in claim 23.

In an embodiment of the invention, the pad is urged into engagement with the flow path surface of the shroud by an adjustable arm and slidable bar which are spring loaded against the flow path surface of the shroud and the rotor blade is positioned in the fixture with reference to the platform.

Preferably, the pad has a surface whose contour is a portion of a sphere and has a shaft disposed in a cylindrical opening in the support structure, for example the appendage of a jaw, such that the pad is rotatable about the axis of the shaft and the axis can incline with respect to the axis of the opening in which the shaft is disposed.

Preferably the pad is metal and preferably it has a contoured surface that closely matches the contour of the shroud.

Preferably, the melting point of the metal pad is greater than the melting point of the shroud material and the hard face material. Thus the pad may be of tungsten which has a melting point which is at least three times greater than the melting point of the hard face material.

Preferably the pad has a thermal conductivity which is greater than the thermal conductivity of the molten material and the adjacent shroud material.

Preferably, the thermal conductivity and thermal capacitance of the pad are selected such that the heat sink effect of the pad is at an acceptable level; one that avoids cracking of the weld material by reason of thermal gradients in the weld material during the deposition of the hard face material.

Thus a primary feature of the invention is blocking molten material from flowing to the flowpath surface of a shroud. Another feature is avoiding heating the pad to a temperature which approaches its melting point. Another feature is transferring heat adjacent the faying surface of the pad with the shroud at a rate which is greater than at the shroud to increase the viscosity of the molten material at the pad location.

A further feature of the present invention is the pad of the fixture which engages the flow path surface of the shroud. Another feature is an assembly for urging the pad into engagement with the pad. Another feature is the structure of the assembly which adapts the assembly to engage the rotor blade for support and for positioning the pad directly from the rotor blade at a location which is not inwardly of the rotor blade. In one detailed embodiment, a feature is a pair of jaws on the assembly. Another feature is a pair of appendages which rotatably engage the jaw and are adjustable with respect to a rotor blade.

Still another feature is the rotatable engagement between the pad and the shroud, the pad having a portion of a spherical surface which engages an appendage and a shaft which is disposed in a cylindrical opening within the supporting structure. Another feature is the thermal conductivity of the pad.

A principal advantage of the present invention is the efficiency and cost saving which results from eliminating the need to finish the flow path surface of the shroud by using a pad for blocking the flow of molten material from the flow path surface of the shroud or blocking molten material from extending toward the airfoil beyond the flow path surface of the shroud.

Another advantage in one embodiment of the method is the ease and speed of installation of the pool of molten material to the pad and the blade shroud which results from orienting the support structure for the pad such that the support structure does not extend laterally beyond the pad and does not extend radially a substantial distance between the platform of the blade and the flow path surface of the shroud. A further advantage is the quick seating of the pad against the flow path surface of the shroud in a faying relationship which results from contouring the pad to a contour which closely matches the flow path surface of the shroud and enabling the pad to rotate about an axis which can be inclined with respect to the lateral direction of the shroud. Another advantage of certain embodiments is the ease and speed of installation of the pad to the shroud which results from the structure which enables supporting and positioning the pad from the rotor blade

An advantage is the durability and integrity of the weld material which results from limiting the amount of heat flowing to the pad to avoid a significant heat sink adjacent the hard face material by, in the preferred embodiments, the judicious choice of the thermal conductivity and thermal capacity of the pad.. Still another advantage is the blockage of molten material which results from increasing the viscosity of the molten material by transferring heat at a greater rate than into the shroud again achieved in the preferred embodiment by judicious selection of the thermal conductivity of the pad.

Some preferred embodiments of the invention will now be described by way of example only with reference to the accompanying drawings in which:
Fig. 1 is a perspective, exploded view of a finished rotor blade and of a fixture for use in disposing material on the shroud of a rotor blade, such as a region of hard material at the notch face location of a rotor blade, with the rotor blade installed in the fixture.
Fig. 1A is an assembled view of a partially formed rotor blade disposed in the fixture shown in Fig. 1.
Fig. 2 is a view of a portion of the fixture shown in Fig. 1 showing the arms of the fixture in the installed position and in the moved position prior to installation.
Fig. 3 is a sectional view taken of Fig. 1, showing the relationship of the pad to the arm.
Fig. 4 is a view corresponding to Fig. 3 showing the deposition of molten material on the shroud.
Fig. 5 is a side elevation view of the shroud of the rotor blade shown in Figs. 1-4, showing the deposition of molten material at the hard face location of the shroud.
Fig. 6 is a perspective, exploded view of a finished rotor blade and of an alternative embodiment of the fixture shown in Fig. 1 for use in disposing a region of material on the shroud of a rotor blade.
Fig. 7 is a top view of a partially formed rotor blade and the fixture shown in Fig. 6 in its operative engaged position with the rotor blade.
Fig. 8 is a side view of a base for supporting the rotor blade and of the fixture and rotor blade shown in Fig. 7 showing an appendage of the fixture engaging the lateral side of the shroud.
Fig. 9 is an end view of an alternate embodiment of the fixture shown in Fig. 6.
Fig. 10 is a sectional view of Fig. 7, showing the relationship of the pad to an appendage of one of the jaws.
Fig. 11 is a view corresponding to Fig. 10 showing the deposition of molten material on the shroud.
Fig. 12 is a side elevation view of the shroud of the rotor blade shown in Figs. 6-8, showing the deposition of molten material at the hard face location of the shroud.
Fig. 13 is a view of a prior art shroud of the rotor blade shown in the preceding Figures showing the relationship of the molten material after deposition on the hard face surface of the shroud, the molten material extending above and below the shroud and hardened at that location.

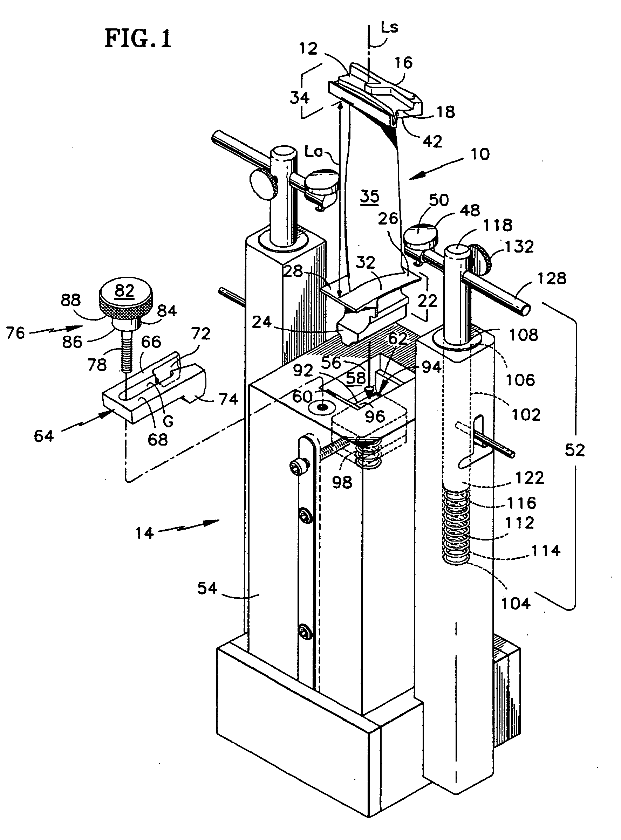

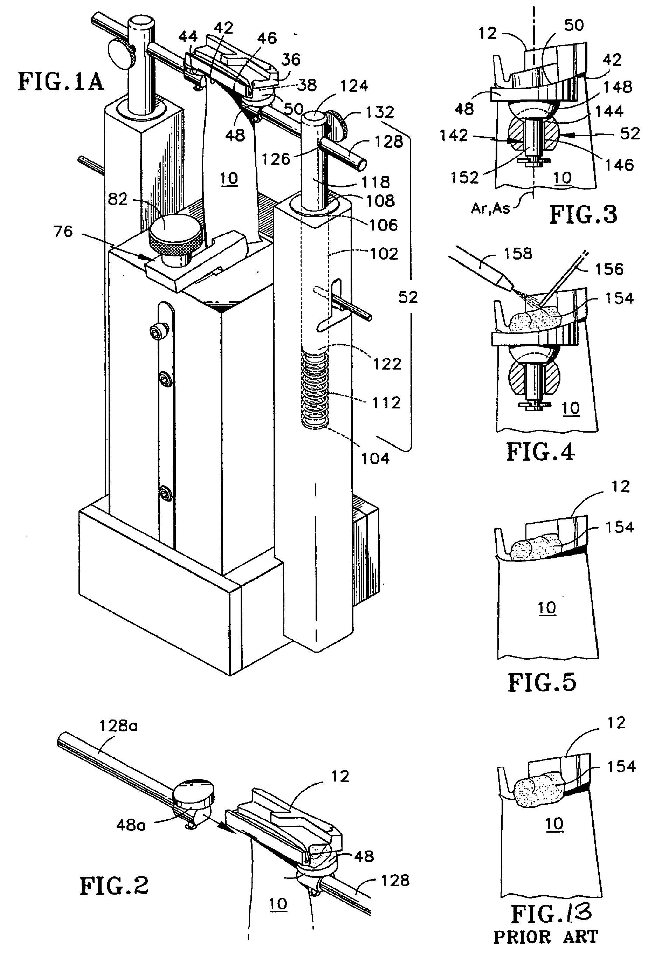

Fig. 1 is an exploded perspective view of a finished rotor blade 10 having a shroud 12; and, a fixture 14 for use in disposing a region of material to the shroud of a rotor blade. The finished blade is shown for purposes of explanation. The blade used with the fixture might be a used rotor blade or a new, partially formed rotor blade as discussed below.

The fixture is shown in exploded fashion to show the relationship of different elements of the fixture to faces 16, 18 of the rotor blade. The face of the rotor blade might extend laterally (circumferentially), such as the face 16, or might extend axially such as the notch face 18. The material is deposited on a substrate of a used rotor blade or on a partially formed rotor blade to form the faces of the shroud shown on the finished rotor blade. For example, parent material might be deposited on the lateral face and hard facing material deposited on the axial, cross notch face. Accordingly, references to the notch face and hardened material that follow are exemplary in nature and do not limit the scope of this disclosure.

The finished rotor blade is shown disposed about a spanwisely extending axis Lₛ. The following description, except for the substrate and notch face, is common to a finished, a partially finished, and a used rotor blade. The rotor blade has a first end 22 having a root section 24 and a platform section 26. The platform section has a first side 28 and a second side 32. The rotor blade has a second end 34. An airfoil section 35 having a length Lₐ extends spanwisely from the first end to the second end. The second end includes the shroud. The shroud has a first side and a second side which extend laterally with respect to the airfoil.

Fig. 1A is an assembled view of the fixture shown in Fig. 1 and shows the fixture 14 in its operatively engaged position with a used or a partially formed rotor blade 10. The shroud of the partially formed blade has a substrate, such as a notch substrate 36, for receiving hardened material. A notch face location 38 is spaced laterally from the substrate. Hard faced material is applied to the substrate until the hard face material extends through and beyond the notch face location. Thereafter, the blade will be machined to its final form, with the finished notch face 18 on the rotor blade extending to and located at the notch face location 38.

As shown in Fig. 1 and Fig. 1A, the shroud has a flow path surface 42 having a first side 44 and a second side 46. The fixture 14 has a pad 48 having a surface 50 and means, that is, an assembly, as represented by the assembly 52, for urging the pad into engagement with the flow path surface 42 of the shroud. The pad 48 has a surface 50 which adapts the pad to engage the flow path surface 42 of the shroud 12 of the rotor blade.

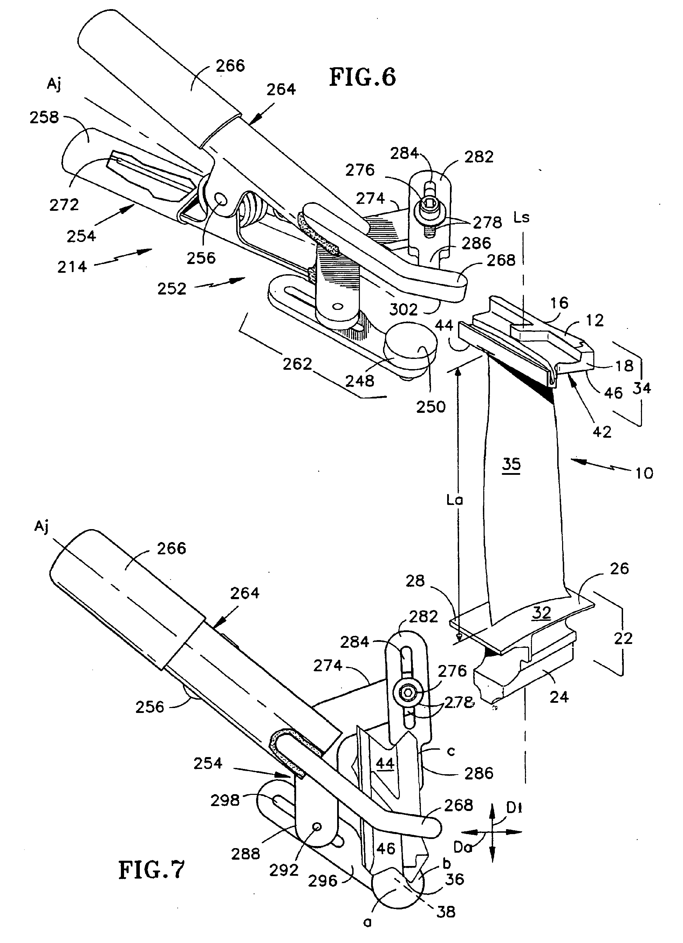

The fixture includes a base 54 which is adapted to engage the root section 24 of the rotor blade. The base has a passage 56 having an opening 58 which adapts the base to receive the first end 22 of the rotor blade. The base supports the rotor blade during operations that are performed on the shroud of the rotor blade. The base might be integrally formed with the assembly that urges the pad into engagement with the flow path surface 42 of the shroud, or the assembly urging the pad might be separately formed from the base as is discussed with regard to Figures 6, 7 and 8 below.

The base has a first surface 60 facing outwardly and bounding a portion of the passage. A second surface 62 disposed across the passage faces outwardly and bounds a portion of the passage. The surfaces adapt the fixture to engage the sides 28,32 of the platform section 26 of the rotor blade 10 in its unfinished condition. The opening of the passage extends inwardly from the first surface and the second surface and adapts the base to receive the root section 24 of the rotor blade.

The base is provided with a clamp 64 having a pair of arms 66,68 extending laterally. The arms are spaced apart leaving a gap G therebetween which adapts the clamp to extend on either side of the airfoil section 35 of the rotor blade. Each of the arms has a projection 72,74 which extends from the arms. The projections adapt the arms to each engage one of the sides of the platform section of the rotor blade. In the operative condition as shown in Fig. 1A, the platform section is trapped between the arms of the clamp and the outwardly facing first and second surfaces 60,62 of the opening 58.

A screw fastener 76 has a rod 78 that threadably engages the base 54 for urging the arms 66,68 of the clamp against the platform section of the rotor blade. The screw fastener has a head 82. A spacer 84 has a first end 86 which engages the arms of the clamp and a second end 88 which is adapted to engage the head of a screw fastener. The spacer further has an opening which extends from the first end to the second end of the spacer and which adapts the spacer to receive the rod of the screw fastener. In an alternate construction, the screw fastener is made as a one piece assembly having a spacer integral with the head of the screw fastener.

A channel 92 extends inwardly from the opening 58. A ground assembly 94 includes a grounding block 96 disposed in the channel. The grounding block is adapted to engage the root section 24 of the rotor blade element during the welding operation. An elastic element, as represented by the spring 98, is adapted to exert a force against the grounding block to urge the grounding block into abutting contact with the rotor blade under operative conditions. Alternatively, the elastic element might be a pneumatic or hydraulic device.

As shown in Fig. 1 and in Fig. 1A with an unfinished rotor blade 10, a housing assembly 52 is the assembly for urging the pad into engagement with the flow path surface of the shroud section of an unfinished rotor blade. Alternatively, the assembly might be a clamp construction, or any another construction which is able to urge a pad against the underside of the flos path surface of the shroud. Examples are pneumatic or hydraulic devices attached to a base or to the rotor blade for support or independent of both.

The housing assembly has a passage 102 having a first end 104 and a second end 106. The second end has an opening 108. An elastic element, such as a spring 112, is disposed in the passage. The spring has a first end 114 which engages the first end of the passage and a second end 116 which faces outwardly. A bar 118 is disposed in the passage. The bar 118 has a first end 122 which engages the elastic element and a second end 124 extending beyond the passage. The second end has a channel 126 which adapts the bar to receive an arm 128.

The arm 128 extends through the channel 126 of the bar 118 to slidably engage the bar. Fig. 2 shows the pad 48 in the engaged position and the pad 48a in the non-engaged position. The arm is moveable outwardly by movement of the bar and laterally by releasing a fastener 132 to enable movement of the arm in the directions shown in Fig. 2. The screw fastener threadably engages the bar and extends through the channel. The screw fastener exerts a force on the arm to secure the arm against movement once the arm is adjusted to the correct lateral location, as shown in Fig. 2.

Fig. 3 is a side elevation view of the shroud 12, of the pad 48, and of the arm 128 of the assembly 52 for urging the pad into engagement with the flow path surface of the shroud. The arm of the assembly 52 has an opening 142 bounded by a first surface 144 having the contour of a portion of a sphere and a cylindrical surface 146 which extends from the first surface. The cylindrical surface is disposed about an axis Aᵣ. The axis Aᵣ extends through the center of the sphere.

The pad 48 has a first surface 148 having the contour of a portion of a sphere. The first surface rotatably engages the spherically shaped surface 144 of the arm 128. A cylindrical shaft 152 extends from the first surface. The cylindrical shaft has a axis rotation of Aₛ. The axis of rotation Aₛ is alignable with the axis Aᵣ of the opening in the arm such that the shaft is disposed in the opening and spaced radially from the cylindrical surface of the arm. This enables the pad to displace itself slightly by inclining the axis Aₛ or rotating about the axis Aₛ.

The surface 50 of the pad is a second surface on the pad 48 having a contour which closely matches the contour of the flow path surface 42 of the shroud. The second surface adapts the pad to engage the flow path surface of the shroud and extends laterally beyond the hard face location of the shroud and beyond the edge of the shroud such that the pad in the engaged position blocks the flow of molten material to the flow path surface of the shroud. Thus, the second surface closely matches the contour of the shroud to an extent which avoids deposition of an unacceptable amount of material on the flow path surface of the shroud and insures that any deposition is within acceptable limits set by aerodynamic and structural concerns. As will be realized, in some embodiments the amount of deposition may require a small amount of rework to bring the flow path surface within acceptable limits. This might occur if the second surface was deliberately contoured to provide this result for reasons unconnected with aerodynamic or structural concerns.

Fig. 4 schematically represents the deposition of the hard face material 154 at the notch face location 38 on the shroud. As shown in Fig. 4, suitable welding wire 156 is in contact with the molten material 154. An arc of a welding torch 158 is used to supply electrical current and heat to the weld wire and hard face material to cause melting of the weld wire and hard face material adjacent the notch face location.

Fig. 5 shows the hard face material 154 at the end of the deposition process. The hard face material is shown extending above a portion of the shroud. The hard face material only extends below a portion of the shroud to a slight extent as a result of the faying relationship between the pad 48 and the underside 42 of the shroud. The amount of material which may extend under the shroud after use of the pad is so small that it results in a projection of acceptable size that does not require further rework. For example, in one particular trial, the projection without the pad (see Fig. 13) was nearly one-sixteenth of an inch (.0625")(1.6mm) and commonly an eighth of one inch (.125")(3.2mm) depending on the skill of the welder. Using the pad with hundreds of rotor blades having a lengths varying from about three (3) inches to twelve (12) inches (75-300mm) resulted in a projection that was less than ten thousandths of an inch (.010") (.25mm) with a surface roughness measurement Ra that is less than the range of ninety to one-hundred and fifty micro inches (90-150 micro inches)(2.3-3.8x10³µm). This projection was aerodynamically acceptable and does not require further finishing of the flow path surface of the shroud. In fact, in many applications, the projection was less than five-thousandths of an inch (.12mm) with a surface roughness measurement Ra that was less than seventy micro-inches (1.8x10³µm).

Figures 6, 7 and 8 are a view of an alternate embodiment of the construction shown in Figures 1 and 1A. In this embodiment, the rotor blade is supported by a separate base 304.

As shown in Fig. 6 and Fig. 7, the shroud has a flow path surface 42 having a first side 44 and a second side 46. The fixture 214 has a pad 248 having a surface 250 and an assembly, as represented by the assembly 252, for urging the pad into engagement with the flow path surface 42 of the shroud. The assembly has a pair of jaws 254,264 which rotatably engage each other at a pivot 256. The pair of jaws is formed of the first jaw 254 having a first end 258 and a second end 262; and, the second jaw 264 having a first end 266 and a second end 268. The jaws are disposed about and moveable toward an axis Aⱼ of the assembly by an element, as represented by the spring element 272, for urging the first end of the jaws apart and the second end of the jaws together.

The first jaw has a first side 274. The first side has a pin 276 and a pair of spaced apart surfaces 278. A first appendage 282 is disposed between the surfaces. The appendage has a slot 284 in which the pin is disposed such that the appendage is slidably and rotatably attached to the jaw to permit movement in the axial Dₐ and lateral Dₗ directions. The first appendage has a surface 286. The surface 286 adapts the appendage to engage the flow path surface 42 on the first side 44 of the shroud 12.

The first jaw 254 has a second side 288. The second side has a pin 292 and a pair of spaced apart surfaces 294 as does the first side 274 of the jaw. A second appendage 296 is disposed between the spaced apart surfaces on the second side. The second appendage has a slot 298 in which the pin 292 is disposed such that the appendage is slidably and rotatably attached to the jaw and permits movement in the axial and lateral directions.

The second jaw 264 of the assembly 252 faces oppositely to the first and second sides 274,288 of the first jaw 254. The second jaw at the second end 268 is disposed laterally between the first side 274 and the second side 288 of the first jaw. The second jaw has a surface 302 which adapts the second jaw to engage the non-flow path side of the shroud.

As shown in Fig. 7, the pin 276 has been loosened and the first appendage 282 rotated and moved laterally and axially with respect to the first side 274 of the first jaw 254 such that the surface 286 of the appendage engages the underside or flow path surface 42 of the first side 44 of the shroud 12. Similarly, the second appendage 296 has been adjusted such that the attached pad 248 is in its operative position. In the engaged position, the second appendage 296 is adjustable with respect to the shroud and the remainder of the fixture such that the second appendage 296 is inclined away from the work area adjacent the pad 248.

The surface 250 of the pad engages the flow path surface of the shroud. The surface 250 has two points a,b on the surface which, with a point c on the surface of the first appendage, define a plane which is substantially parallel to the flow path surface of the shroud. The pad extends laterally beyond the notch face location 38 of the shroud 12 (the distance between the notch face location 38 and the substrate 36 is exaggerated) to engage the flow path surface 42 of the shroud and beyond the shroud such that the pad in the engaged position is adapted to block the flow of molten material to the flow path surface of the shroud.

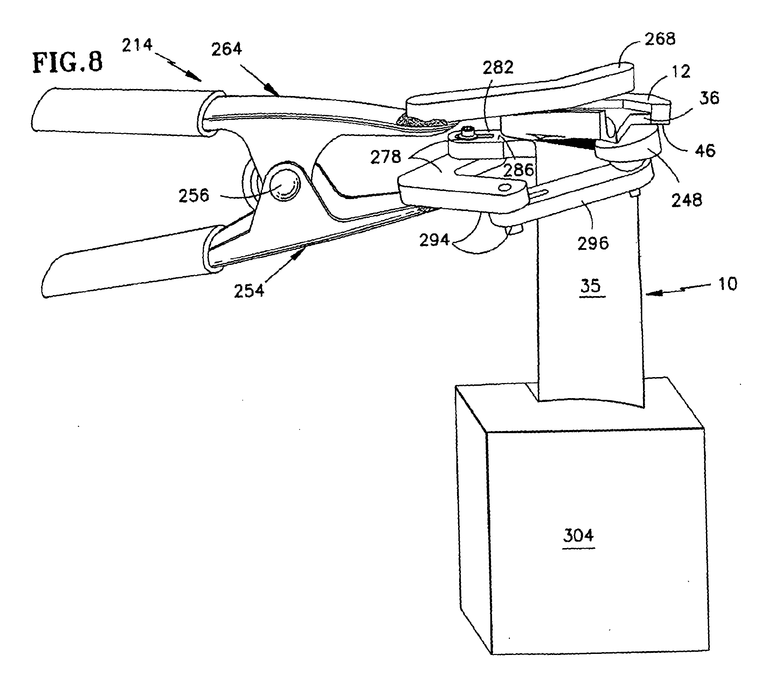

Fig. 8 is a side view of the fixture 214 and the unfinished (partially formed) rotor blade 10 shown in Fig. 2 in the engaged position. Fig. 8 shows the appendages 282,296, of the fixture engaging the lateral sides 44,46 of the flow path surface 42 of the shroud. In addition, Fig. 8 shows a base 304 for engaging the rotor blade 10 to support the rotor blade as the hard facing operation takes place.

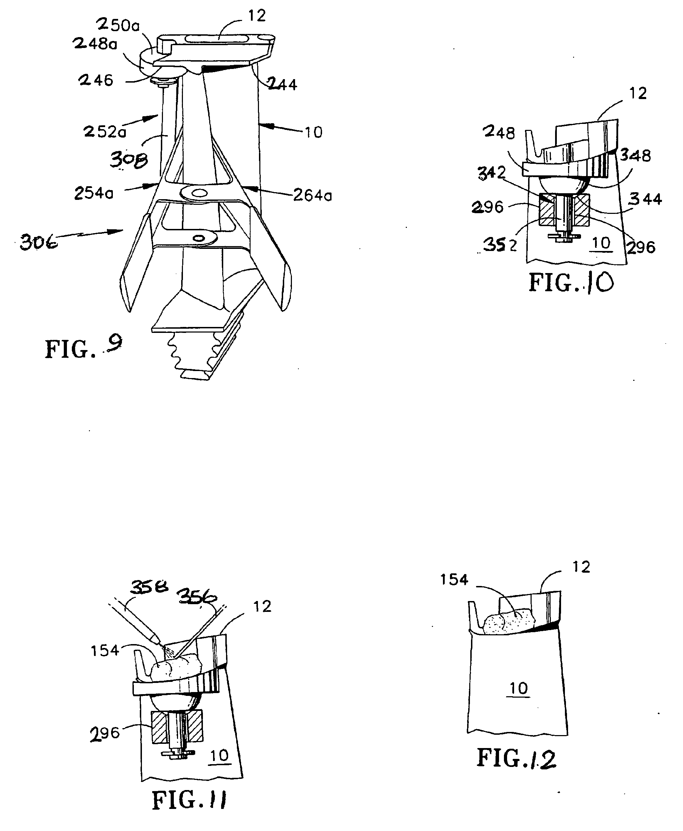

Fig.9 is an end view of an alternate embodiment 306 of the assembly shown in Fig. 6. Like the embodiment shown in Figures 6-8, the embodiment in Fig. 9 has a pair of jaws 254a, 264a which are adapted to engage the rotor blade at another location which is not inwardly of the airfoil, such as on the airfoil itself. A bar 308 extends spanwisely from one of the jaws 254a. A pad 248a is urged into engagement with the flow path surface of a side 44a of the shroud of the rotor blade.

Fig. 10 is a side elevation view of the shroud 12, of the pad 248 of the embodiment of Figure 6, and of the second appendage 296 of the assembly 252 for urging the pad into engagement with the flow path surface of the shroud. The second appendage 296 of the assembly 252 has an opening 342 bounded by a first surface 344 having the contour of a portion of a sphere and a cylindrical surface 346 which extends from the first surface. The cylindrical surface is disposed about an axis Aᵣ. The axis Aᵣ extends through the center of the sphere.

The pad 248 has a first surface 348 having the contour of a portion of a sphere. The first surface rotatably engages the spherically shaped surface 344 of the second appendage 296. A cylindrical shaft 352 extends from the first surface. The cylindrical shaft has a axis rotation of Aₛ. The axis of rotation Aₛ is alignable with the axis Aᵣ of the opening in the second appendage 296 such that the shaft is disposed in the opening and spaced radially from the cylindrical surface of the arm. This enables the pad to displace itself slightly by inclining the axis Aₛ or rotating about the axis Aₛ.

The surface 250 of the pad is a second surface on the pad 248 having a contour which closely matches the contour of the flow path surface 42 of the shroud. The second surface adapts the pad to engage the flow path surface of the shroud and extends laterally beyond the hard face location of the shroud and beyond the edge of the shroud such that the pad in the engaged position blocks the flow of molten material to the flow path surface of the shroud. Thus, the second surface closely matches the contour of the shroud to an extent which avoids deposition of an unacceptable amount of material on the flow path surface of the shroud and insures that any deposition is within acceptable limits set by aerodynamic and structural concerns. As will be realized, in some embodiments the amount of deposition may require a small amount of rework to bring the flow path surface within acceptable limits. This might occur if the second surface was deliberately contoured to provide this result for reasons unconnected with aerodynamic or structural concerns.

Fig. 11 schematically represents the deposition of the hard face material 154 at the notch face location 138 on the shroud. As shown in Fig. 4, suitable welding wire 356 is in contact with the molten material 154. An arc of a welding torch 358 is used to supply electrical current and heat to the weld wire and hard face material to cause melting of the weld wire and hard face material adjacent the notch face location.

Fig. 12 shows the hard face material 154 at the end of the deposition process. The hard face material is shown extending above a portion of the shroud. The hard face material only extends below a portion of the shroud to a slight extent as a result of the faying relationship between the pad 48 and the underside 42 of the shroud. The amount of material which may extend under the shroud after use of the pad is so small that it results in a projection of acceptable size that does not require further rework. For example, in one particular trial, the projection without the pad (see Fig. 13) was nearly one-sixteenth of an inch (.0625")(1.6mm) and commonly an eighth of one inch (.125")(3.2mm) depending on the skill of the welder. Using the pad with hundreds of rotor blades having a lengths varying from about three (3) inches to twelve (12) inches (75-300mm) resulted in a projection that was less than ten thousandths of an inch (.010") (.25mm) with a surface roughness measurement Ra that is less than the range of ninety to one-hundred and fifty micro inches (90-150 micro inches)(2.3-3.8x10³µm). This projection was aerodynamically acceptable and does not require further finishing of the flow path surface of the shroud. In fact, in many applications, the projection was less than five-thousandths of an inch (.12mm) with a surface roughness measurement Ra that was less than seventy micro-inches (1.8x10³µm).

During operation of the fixture shown in Figures 1 and 1A, rotor blade after rotor blade is installed in the fixture and welded. Each blade is quickly removed and a new blade installed by releasing the threaded fastener and tightening it. The rotor blade is positioned by the platform section which, compared to the root section in a partially finished blade, is a much better datum. The arm 128 and bar 118 which engage the spring 112 are easily moved, compressing the spring. The pad is moved into position against the new blade, with compression of the spring accommodating differences in height between rotor blades. These differences might occur for the same type of rotor blade or for different types of rotor blades as the new blade is installed because of the partially formed nature of the blade and slight differences in orientation of the blade in the fixture. A new type of rotor blade may require a different size pad 48 which is easily installed by releasing the threaded fastener 132, sliding the arm out of engagement and disposing a new arm with a pad attached in the fixture or simply removing the clip retainer from the shaft 152 of the pad and replacing the small pad with a larger pad.

The pad 48 is easily and quickly adjusted into a faying relationship with the underside of the flow path surface of the shroud by reason of its ability to rotate about axis Aₛ and to incline slightly with respect to the axis Aᵣ of the opening in the arm 128 of the assembly 52. Thus, the pad is quickly seated in the event that engagement of the clamp with the platform section of the rotor blade has caused a small misalignment of the rotor blade in the fixture. A particular advantage is the engagement of the airfoil outwardly of the partially formed root. This eliminates variations in engagement associated with such a root and speeds set up time in the fixture.

During operation of the fixture shown in Figures 6 and 7, the fixture 214 is used to engage rotor blade after rotor blade as the rotor blade is welded. The fixture is quickly removed and engages a new blade by compressing the spring 272 and separating the jaws 254,264. The rotor blade is positioned by the shroud, which is a much better datum than the root section in a partially finished blade, or even the airfoil section by reason of the direct engagement of the flow path surface 42. The second appendage 296 is easily adjusted once the pin 292 is released. The pad is moved into position against the new blade with the jaws firmly engaging the shroud. Very little adjustment is required for the same type of rotor blade. A new type of rotor blade may require a different size pad 48 which is easily installed by sliding the second appendage 296 out of engagement and disposing a new second appendage with a pad attached to the fixture or simply removing the clip retainer from the shaft 352 of the pad and replacing the small pad with a larger pad.

The pad 248 is easily and quickly adjusted into a faying relationship with the underside of the flow path surface of the shroud by reason of its ability to rotate about axis Aₛ and to incline slightly with respect to the axis Aᵣ of the opening in the second appendage 296 of the assembly 252. Thus, the pad is quickly seated in the event that engagement of the jaws results in a slight misalignment of the fixture to the shroud. A particular advantage is the engagement of the airfoil outwardly of the partially formed root. This eliminates variations in engagement associated with such a root or the airfoil and speeds set up time in the fixture.

In the above embodiments, the thermal conductivity of the pad 48, 248 is greater than the thermal conductivity of the hard face material 154 and the shroud 12. A tungsten pad, which has been used to good effect, has a thermal conductivity that is normally four times greater than the thermal conductivity of the molten material and the shroud at operative temperatures. As the weld material 154 is deposited on the pad at the hard face location, the pad conducts the heat away from the molten material adjacent the line of faying contact between the shroud and the pad at a faster rate than at the shroud. This causes the molten material to become more viscous at that location, blocking the leakage of molten material to the flow path surface of the shroud. The thermal capacitance of the shroud (the mass of the material multiplied by the specific heat at constant pressure) is established such that the pad does not act as a heat sink of such a size that cracking of molten material occurs as it cools. Thus, even though the thermal conductivity is high with respect to the material on the shroud, the thermal capacitance of the pad is such that cracking of the molten material is avoided.

The melting point of the pad is greater than the melting point of the shroud or the molten material. This avoids attaching the pad to the shroud. A melting point of two, three or four times the molten material is desirable to provide a factor of safety. In fact, a tungsten pad will have a melting point that is about four times the melting point of the molten material.

A particular advantage of the present invention is avoiding or reducing the necessity of finishing the flow path surface of the shroud. Hand grinding and hand sanding of the flow path surface of the shroud is one way of removing excess molten material which cannot be tolerated for aerodynamic purposes. This is an undesirable operation in terms of time and impact on personnel performing the operation. The repetitive motion of moving the grinding wheel with respect to the surface to obtain an acceptable finish without damaging the flow path surface of the shroud may adversely effect muscles and tendons of the arm required to repeatedly perform that motion. In addition, even the most conscientious and most skilled personnel may occasionally injure the flow path surface of the shroud by over grinding or over sanding the flow path surface of the shroud resulting in scrapping of the part.

A particular advantage of the construction shown in Figs. 6, 7 and 8 is the orientation of the assembly 252 for urging the pad into engagement with the shroud. For example, the spanwise length of the assembly is about six tenths of an inch (15mm) below the shroud. The fixture leaves free and unencumbered the region between the fixture and the airfoil which amounts to at least seventy-percent of the region for an airfoil of about three inches (75mm) to nearly ninety-five percent for an airfoil of about twelve inches (300mm). In addition, the fixture does not extend beyond the pad. This provides room for the welder to manipulate the welding device and facilitates welding.

After completion of the deposition of the hard face material, the rotor blade is removed from the fixture, encapsulated in a block of material to provide datum for the machining operations and machined to its final contour at the root platform and shroud sections of the rotor blade. Alternatively, the airfoil might be fixtured in a hard point fixture which engages other datums on the airfoil and then machined.

Although the invention has been shown and described with respect to detailed embodiments thereof, it should be understood by those skilled in the art that various changes in form and detail thereof may be made without departing from the scope of the claimed invention.

## Claims

1. A method of disposing a region of material (154) at a shroud face location (3 8) of a rotor blade (10), the rotor blade having a root section (24), a platform section (26), an airfoil section (35) extending spanwisely outwardly from the root section (24), a shroud section (12) extending laterally with respect to the airfoil section, the shroud section having a shroud face location and a substrate for receiving a material and having a flow path surface (42) which faces the platform section (26) of the airfoil, the method comprising the step of forming a pool of molten material adjacent the substrate by melting material at the substrate location on the shroud the method being **characterized by** the further steps of:
blocking the flow of molten material to the flow path surface of the shroud by urging a pad (48;248;248a) against the flow path surface (42) of the shroud which closely conforms to the contour of the flow path surface and which extends beyond the shroud; and
cooling the molten material and shroud while urging the pad (48;248;248a) against the path surface of the shroud until the molten material solidifies.

2. A method as claimed in claim 1 wherein the pad (48;248;248a) is urged against the flow path surface (42) of the shroud with a resilient force such that the pad resists movement away from engagement with the flow path surface of the shroud with a restorative force.

3. A method as claimed in claim 1 or 2 wherein the pad (48;248;248a) is oriented with respect to the flow path surface (42) of the shroud by engaging the rotor blade outwardly of the root section (24) of the rotor blade

4. A method as claimed in claim 3 including disposing support structure adjacent the rotor blade which engages the pad (48) and engaging the platform section (32) of the rotor blade for supporting and positioning the pad (48) from the platform section (32) of the rotor blade.

5. A method as claimed in claim 3 including disposing support structure adjacent the rotor blade which engages the pad (248) and engaging the shroud section (12) of the rotor blade for supporting and positioning the pad (248) from the shroud section (12).

6. A method as claimed in claim 5 wherein the support structure is oriented such that it does not extend laterally beyond the pad (248) and does not extend radially a substantial distance between the platform (32) of the blade and the flow path surface (42) of the shroud (12).

7. A method as claimed in any preceding claim wherein the pad (48;248;248a) is a metal pad having a thermal conductivity that is greater than the thermal conductivity of the shroud and molten material whereby during cooling of the molten material heat is transferred from the molten material adjacent the shroud and pad at a greater rate than from the molten material adjacent the shroud so that the viscosity of the molten material adjacent the faying surfaces of the shroud is increased.

8. A method as claimed in any preceding claim wherein the pad (48;248;248a) is metal and has a predetermined thermal capacitance such that the pad does not act as a heat sink transferring too much heat out of the molten material and causing cracking of the solidifying molten material.

9. A method as claimed in any preceding claim wherein the pad (48;248) has at least one axis of rotation and wherein the pad is rotated about at least one axis of the pad as the pad engages the shroud(12).

10. A method as claimed in claim 9 wherein the axis is inclinable with respect to the surface of the shroud (12) and the pad (48;248) is rotated about at least one axis of the pad by inclining the axis of rotation with respect to the flow path surface (42) of the shroud (12)

11. A method as claimed in claim 1, the shroud section being formed of a first material, having a substrate for receiving a hardened material and a notch face location (38) for engaging an associated face location on an adjacent airfoil, and having a flow path surface (42) which faces the platform section (26) of the airfoil, comprising:
engaging the platform section (36) of the rotor blade on opposite sides of the platform section to restrain the rotor blade against movement;
electrically grounding the rotor blade though the root section (24) of the airfoil;
melting hard face material at the shroud notch face location (38) by welding a second material to the shroud which includes the step of passing a direct current electrical arc through the shroud notch face location to form the second material having a hardness at operative conditions that is greater than the hardness of the first material;
blocking the flow of molten second material to the flow path surface of the shroud by urging said metal pad (48;248) against the flow path surface (42) of the shroud (12) while welding the second material to the shroud notch face, the metal pad (48;248) having at least one axis of rotation, and including the step of rotating the metal pad (48;248;248a) about at least one axis of the pad as the metal pad (48;248) engages the shroud such that the contour of the pad (48;248) is matched to the contour of the underside of the shroud in a faying relationship and such that the metal pad (48;248) extends beyond the shroud to block the flow of molten second material to the flow path surface (42), said pad having a higher thermal conductivity than the molten material and the shroud so as to increase the viscosity of the molten material adjacent the faying surfaces of the shroud and pad.

12. A method as claimed in any preceding claim wherein during cooling of the molten material, the pad (48;248;248a) is heated by the heat transfer to a temperature which is less than one-half the melting point of the pad.

13. In combination, a rotor blade (10) having a shroud location (38) and a fixture for use in disposing a region of material at the shroud location (38) of the rotor blade (10), the rotor blade being disposed about a spanwise axis, the rotor blade having a first end having a root section (24), an airfoil section (35) which extends spanwisely, and a second end having a shroud (12) extending laterally with respect to the airfoil section (35), the shroud having a flow path surface (42), and a top surface, a shroud face location and a substrate for receiving the hardened material adjacent the shroud face location in molten form, said the fixture comprising:
a pad (248;248a) having a contour which matches the contour of the flow path surface (42) of the shroud and which adapts the pad to engage the flow path surface of the shroud, the surface being adapted to extend laterally beyond the hard face location of the shroud and beyond the shroud such that the pad in the engaged position blocks the flow of molten material to the flow path surface of the shroud; and
an assembly (252) for urging pad (248;248a) into engagement with the flow path surface (42) of the shroud, the assembly being supported and positioned from the rotor blade at a location which is not inwardly of the airfoil

14. A combination as claimed in claim 13 wherein the pad (248) rotatably engages the assembly (252) for urging the pad (248) into engagement with the flow path shroud

15. A combination as claimed in claim 14 wherein the assembly (252) for urging the pad into engagement with the flow path shroud has an arm (296) with an opening bounded by a first surface (246) having the contour of a portion of a sphere and a cylindrical surface (342) disposed about an axis Aᵣ, the axis Aᵣ extending through the center of the sphere and wherein the pad (248) has a cylindrical shaft (352) having an axis of rotation As and alignable with the axis of rotation Ar such that the shaft (352) is disposed in the opening and spaced radially from the cylindrical surface (342) of the arm(296), the pad (248) further having a spherically shaped surface (348) from which the shaft (352) extends, the spherically shaped surface rotatably engaging the spherically shaped surface of the assembly (252) for urging the pad (248) into engagement with the flow path shroud (12) and wherein the pad (248) is rotatable about the axis As and the axis As is tiltable through the engagement of the spherical surfaces on the pad (248) and the arm (296).

16. A combination as claimed in claim 13, 14 or 15 wherein the assembly (252) for urging the pad (248) into engagement with the flow path shroud has a first jaw (254) having a surface for engaging a surface on the rotor blade at a first location and a second jaw (264) having a surface for engaging a surface on the airfoil at a second location which is spaced from the first location, said locations being not inwardly of the airfoil, and further includes an element (272) for urging the jaws (254,264) into engagement with the rotor blade (10).

17. A combination as claimed in claim 18 wherein the first jaw (254) has an appendage (296) which is slidably and rotatably attached to the jaw (254) and is moveable in the lateral direction.

18. A combination as claimed in claim 17 wherein the appendage (296) has an opening (344) bounded by a first surface (346) having the contour of a portion of a sphere and a cylindrical surface (342) disposed about an axis Ar, the axis Ar extending through the center of the sphere which adapts the appendage (296) to engage a surface on a pad (248) and wherein the pad (248) has a cylindrical shaft (352) having an axis of rotation As and alignable with the axis of rotation Ar such that the shaft (352) is disposed in the opening (344) of the first jaw (254) and is spaced radially from the cylindrical surface (342) of the first jaw (254), the pad (248) having a first surface (348) which is spherically shaped and which rotatably engages the spherically shaped surface (342) of the appendage (296) and from which the shaft (352) extends.

19. A combination as claimed in claim 16, 17 or 18, wherein the rotor blade with which the fixture is intended for use has a first side and a second side on the flow path surface (42) of the shroud, wherein the first jaw (254) has a first side (274) for engaging the first side of the flow path surface and the first jaw (254) has a second side (288) spaced laterally from the first side (274) to which the appendage (296) is attached, the second jaw (264) being disposed laterally between the first side (274) and the second side (288) of the first jaw (254), the second jaw engaging the non-flow path side of the shroud.

20. A combination as claimed in claim 13, 14 or 15, wherein the rotor blade with which the fixture is intended for use has a first side and a second side on the flow path surface (42), wherein the assembly (252) for urging the pad (248) into engagement with the flow path surface of the shroud has a pair of jaws (254,264), wherein the first jaw (254) has a first side (274) for engaging the first side of the flow path surface and the first jaw (254) has a second side (288) spaced laterally from the first side (274) to which the appendage (296) is attached, the second jaw (264) being disposed laterally between the first side (274) and the second side (288) of the first jaw (254), the second jaw engaging the non-flow path side of the shroud.

21. A combination as claimed in any of claims 16 to 20 wherein the assembly for urging the pad (248) into engagement with the flow path shroud having jaws which engage the rotor blade, does not extend laterally beyond the pad (248) and does not extend radially from the pad (248) a substantial distance in a region between the platform (26) of the blade and the flow path surface (42) of the shroud such that the radial extent of means in that region is less than one fourth the length La of the airfoil.

22. A combination as claimed in claim 13 for use in disposing a region of hardened material at the notch face location (38) for a rotor blade, the rotor blade being disposed about a spanwise axis which has a first end having a root section (24) and a platform section (26), the platform section (26) having a first side and a second side extending laterally with respect to the spanwise axis, which has an airfoil section (35) which extends spanwisely and which has a second end having a shroud (12) extending laterally with respect to the airfoil, the shroud having a flow path surface (42) having a first side and a second side, and a top surface, a notch face location (38) and a substrate for receiving the hardened material adjacent the notch face location in molten form, which comprises:
said assembly (252) for urging said pad (248) into engagement with the flow path surface (48) of the shroud, the assembly having a pair of jaws (254,264) disposed about and movable toward an axis A of the assembly, the pair of jaws comprising a first jaw (254) and a second jaw (264), the assembly having
an elastic element (272) for urging the jaws together,
the first jaw (254) having
a first side (274) having a pin (276) and a pair of spaced apart surfaces (278) and a first appendage (282) disposed between the surfaces having a slot (284) in which the pin (276) is disposed such that the appendage (282) is slidably and rotatably attached to the jaw in the longitudinal and lateral directions, the first appendage having a surface which adapts the appendage to engage a flow path surface (42) on the first side of the shroud;
a second side (288) having a pin (292) and a pair of spaced apart surfaces (294) and a second appendage (296) disposed between the surfaces having a slot (298) in which the pin (292) is disposed such that the second appendage (296) is slidably and rotatably attached to the jaw in the longitudinal and lateral directions, the second appendage (296) having an opening (344) bounded by a first surface having the contour of a portion of a sphere and a cylindrical surface (342) disposed about an axis Ar, the axis Ar extending through the center of the sphere which adapts
the appendage to engage a surface on a pad (248);
the second jaw (264) being disposed laterally between the first side (274) and the second side (288) of the first jaw (254), the second jaw (264) having surface which adapts the second jaw to engage the non-flow path side of the shroud;
said pad (248) having a cylindrical shaft (352) having an axis of rotation As and alignable with the axis of rotation Ar such that the shaft (352) is disposed in the opening (344) of the first jaw (254) and is spaced radially from the cylindrical surface of the first jaw (254), the pad (248) having
a first surface (348) which is spherically shaped and which rotatably engages the spherically shaped surface of the second appendage (296) and from which the shaft (352) extends,
a second surface (250) having two points on the second surface which with the point on the surface of the first side define a plane in the operative condition which extends laterally and is substantially parallel to the flow path surface of the shroud, the second surface (250) having a contour which closely matches the contour of the flow path surface of the shroud and which adapts the pad to engage the flow path surface of the shroud and which extends laterally beyond the hard face location of the shroud and beyond the shroud such that the pad in the engaged position blocks the flow of molten material to the flow path surface of the shroud;
wherein the jaws (254,264) of the assembly are adapted to engage the shroud of the rotor blade and the elastic element (272) urges the jaws against the flow path surface and the non-flow path surface of the shroud to support and position the pad from the shroud in the operative condition;
wherein the appendages (282,296) permit lateral adjustment of the first jaw (254) with respect to the shroud (10) of the rotor blade to facilitate engagement between the pad and the flow path surface of the shroud and to permit engagement of the shroud without structure extending between the airfoil and shroud and laterally outwardly of the pad;
wherein the pad (248) is rotatable about the axis As and the axis As is tiltable through the engagement of the spherical surfaces on the pad and the second appendage 296 to enable the second surface of the shroud to accommodate minor variations in the orientation of the shroud with respect to the fixture and enables the second surface to engage the flow path surface of the shroud;
wherein at least the portion of the pad (248) adjacent the second surface is formed of a material having a thermal conductivity which is at least four times the thermal conductivity of the molten material and the shroud at operative temperatures to conduct heat away from molten material adjacent the line of faying contact between the shroud and the pad to cool the molten material at the line of faying contact to cause the molten material to become more viscous at that location to block the leakage of molten material to the flow path surface of the shroud; and,
wherein the pad (248) has a thermal capacitance which is less than the thermal capacitance of the shroud to avoid the pad (248) acting as a heat sink and cracking the molten material as it cools.

23. In combination, a rotor blade (10) having a shroud face location (38) and a fixture for use in disposing a region of material at the shroud face location (38) of the rotor blade (10), the rotor blade (10) being disposed about a spanwise axis, the rotor blade having a first end having a root section (24), an airfoil section (35) which extends spanwisely, and a second end having a shroud (12) extending laterally with respect to the airfoil section, the shroud having a shroud face location (38) and a substrate for receiving the hardened material adjacent the shroud face location in molten form, the fixture comprising:
a base (54) for engaging the rotor blade (10);
a pad (48) having a contour which adapts the pad to engage the flow path surface of the shroud, the contour (50) surface being adapted to extend laterally beyond the hard face location of the shroud and beyond the shroud such that the pad in the engaged position blocks the flow of molten material to the flow path surface of the shroud; and
an assembly (52) for urging a pad (48) into engagement with the flow path surface (42) of the shroud;

24. A combination as claimed in claim 23 wherein the pad (48) is mounted rotatably with respect to the assembly (52).

25. A Combination as claimed in claim 23 or 24 wherein the assembly for urging the pad (48) into engagement with the flow path shroud comprises a housing (52) having a passage (102), an elastic element (112) disposed in the passage (102) having a first end which engages the housing (52) and a second end which is adapted to engage a bar (118) disposed in the passage (102) which engages the elastic element (112), the bar (118) being attached to the pad (48) to urge the pad into engagement with the flow path surface (42) of the shroud.

26. A combination as claimed in claim 25 wherein the bar (118) has a first end which engages the elastic element (112) and a second end extending beyond the passage having a channel (126) which adapts the bar to slidably receive an arm (128) which extends through the channel (126) in the bar (118) and which has an end spaced from the bar (118) which is attached to the pad (48).

27. A combination as claimed in any of claims 23 to 26 wherein the base (54) has a passage (56) which adapts the base to receive the first end of the rotor blade.

28. A combination as claimed in any of claims 23 to 27 wherein the fixture includes a ground assembly having a ground (96) which is adapted to engage the root section of the rotor blade and means (98) for urging the ground (96) and the rotor blade (10) into abutting contact.

29. A combination as claimed in claim 23 for use in disposing a region of hardened material at the notch face location (38) for a rotor blade (10), the rotor blade being disposed about a spanwise axis which has a first end having a root section (24) and a platform section (26), the platform section (26) having a first side and a second side extending laterally with respect to the spanwise axis, which has an airfoil section (35) which extends spanwisely and which has a second end having a shroud extending laterally with respect to the airfoil section (35), the shroud having a notch face location and a substrate for receiving the hardened material adjacent the notch face location in molten form,
said base (54) having a passage (56) which adapts the base to receive the first end of the rotor blade (10), the base further including,
a first surface (60) facing outwardly and bounding a portion of the passage (56),
a second surface (62) facing outwardly and bounding a portion of the passage (56),
an opening of the passage (56) which extends inwardly from the first surface and the second surface, and which adapts the base to receive the root section (24) of the rotor blade (10),
a clamp (64) having a pair of arms (66,68) extending laterally, the arms being spaced apart leaving a gap (G) therebetween, the gap (G) adapting the clamp to extend on either side of the airfoil,
each of the arms (66,68) having a projection (72,74) which extends from the arm and adapts the clamp to engage one of the sides of the platform section (26) of a rotor blade in the operative condition to trap the platform section between the arms of the clamp and the outwardly facing first and second surfaces of the opening,
a spacer (84) having a first end (86) which engages the arms of the clamp and a second end (88) which is adapted to engage the head of a screw fastener (76), the spacer further having an opening that extends from the first end to the second end of the spacer which adapts the spacer to receive a rod (78) of the screw fastener (76),
the screw fastener (76) having a rod (78) that threadably engages the base for urging the arms (72,74) of the clamp (64) against the platform section of the rotor blade, the screw fastener (76) having a head (82) which engages an end of the spacer for urging the spacer against the arms of the clamp,
a channel (92) extending inwardly from the opening which is adapted to receive a grounding block (96);
a ground assembly (94) which includes
a grounding block (96) disposed in the channel (92) which is adapted to engage the root section (24) of the rotor blade,
an elastic element (98) which is adapted under operative conditions to exert a force against the grounding block (96) for urging the grounding block into abutting contact with the rotor blade (10) element,
said assembly (52) being a housing assembly (52) for urging a pad assembly into engagement with the flow path surface of the shroud section, the housing assembly including:
a housing having a passage (102) having a first end (104) which is adapted to engage an elastic element (112) and a second end having an opening which adapts the passage to receive a bar (118),
an elastic element (112) disposed in the passage (102) having a first end which engages the first end (104) of the passage (102) and a second end which is adapted to engage a bar (118),
a bar (118) disposed in the passage (102) having a first end (122) which engages the elastic element (112) and a second end extending beyond the passage having a channel (126) which adapts the bar (118) to receive an arm (128),
an arm (128) which extends through the channel (126) in the bar to slidably engage the bar (118) and which has an end spaced from the bar, the end having an opening (142) bounded by a first surface (144) having the contour of a portion of a sphere and a cylindrical surface disposed about an axis Aᵣ, the axis Aᵣ extending through the center of the sphere,
a screw fastener (132) which threadably engages the bar (118) and which extends to the channel (126) for exerting a force on the arm (126) to secure the arm against movement,
said pad (48) having a cylindrical shaft (152) having an axis of rotation As and alignable with the axis of rotation Ar such that the shaft (152) is disposed in the opening and spaced radially from the cylindrical surface of the arm(128), the pad (48) having
a first surface (148) from which the shaft (152) extends, the first surface having the contour of a portion of a sphere and which rotatably engages the spherically shaped surface of the arm (128),
a second surface (50) having a contour which closely matches the contour of the flow path surface of the shroud and which adapts the pad (48) to engage the flow path surface (42)of the shroud and which extends laterally beyond the hard face location of the shroud and beyond the shroud such that the pad (48) in the engaged position blocks the flow of molten material to the flow path surface of the shroud,
wherein the elastic element (98) urges the bar (118) outwardly and against the flow path surface of the shroud to accommodate differences in height between rotor blades;
wherein the screw fastener (132) engages the arm (128) to permit lateral adjustment of the arm with respect to the shroud of the rotor blade;
wherein the pad (48) is rotatable about the axis As and the axis As is tiltable through the engagement of the spherical surfaces on the pad (48) and the arm (128) to enable the second surface of the shroud to accommodate minor variations in the orientation of the shroud with respect to the fixture and enable the second surface to engage the flow path surface of the shroud;
wherein at least the portion of the pad (48) adjacent the second surface is formed of a material having a thermal conductivity which is at least four times the thermal conductivity of the molten material and the shroud at operative temperatures to conduct heat away from molten material adjacent the line of faying contact between the shroud and the pad to cool the molten material at the line of faying contact to cause the molten material to become more viscous at that location to block the leakage of molten material to the flow path surface of the shroud; and,
wherein the pad (48) has a thermal capacitance which is less than the thermal capacitance of the shroud to avoid the pad acting as a heat sink and cracking the molten material as it cools.

30. A combination as claimed in any of claims 14 to 29 wherein the pad (48;248;248a) is metal.

31. A combination as claimed in claim 30 wherein the pad (48;248;248a) is tungsten.

32. A combination as claimed in any of claims 13 to 31 wherein the pad (48;248;248a) is formed of a material having a melting point greater than the melting point of the shroud material and the hard face material..

33. A combination as claimed in claim 32 wherein the pad (48;248;248a) is formed of a material having a melting point at least three times greater than the melting point of the shroud material and the hard face material.

34. A combination as claimed in any of claims 14 to 33 wherein at least the portion of the pad (48;248;248a) adjacent the substrate is formed of a material having a thermal conductivity which is greater than the thermal conductivity of the molten material and the shroud at operative temperatures.

35. A combination as claimed in claim 34 wherein the material of the pad (48;248;248a) has at least four times the thermal conductivity of the molten material and the shroud at operative temperatures.

36. A combination as claimed in any of claims 13 to 35 wherein the pad (48;248;248a) has a thermal capacitance which is less than the thermal capacitance of the shroud, to avoid the pad acting as a heat sink and cracking the molten material as it cools.

## Patentansprüche

1. Verfahren des Anbringens eines Bereichs von Material (154) an einer Stelle (38) einer Stirnfläche eines Kragens einer Rotorschaufel (10), wobei die Rotorschaufel einen Wurzelabschnitt (24), einen Palttformabschnitt (26), einen sich von dem Wurzelabschnitt (24) entlang der Spannweite nach außen erstreckenden Strömungsprofilabschnitt (35) und einen sich in Bezug auf den Strömungsprofilabschnitt lateral erstreckenden Kragenabschnitt (12) aufweist, wobei der Kragenabschnitt eine Stelle einer Stirnfläche des Kragens und ein Substrat zum Aufnehmen eines Materials aufweist und eine dem Plattformabschnitt (26) des Strömungsprofils gegenüberliegende Strömungspfadoberfläche (42) aufweist, wobei das Verfahren den Schritt des Ausbildens einer Ansammlung von geschmolzenem Material anliegend an das Substrat durch Schmelzen von Material an der Substratstelle an dem Kragens aufweist,
wobei das Verfahren durch die folgenden weiteren Schritte **gekennzeichnet** ist:
Blockieren des Fließens von geschmolzenem Material zu der Strömungspfadoberfläche des Kragens durch Drücken einer Auflage (48;248;248a) gegen die Strömungspfadoberfläche (42) des Kragens, die der Kontur der Strömungspfadoberfläche genau entspricht und die sich über den Kragen hinaus erstreckt; und
Kühlen des geschmolzenen Materials und des Kragens, wobei die Auflage (48;248;248a) gegen die Pfadoberfläche des Kragens gedrückt wird, bis sich das geschmolzene Material verfestigt.

2. Verfahren nach Anspruch 1, wobei die Auflage (48;248;248a) mit einer Federkraft gegen die Strömungspfadoberfläche (42) des Kragens gedrückt wird, so dass die Auflage Bewegung weg von dem Eingriff mit der Strömungspfadoberfläche des Kragens mit einer stärkenden Kraft widersteht.

3. Verfahren nach Anspruch 1 oder 2, wobei die Auflage (48;248;248a) in Bezug auf die Strömungspfadoberfläche (42) des Kragens ausgerichtet wird, indem sie mit der Rotorschaufel außerhalb des Wurzelabschnitts (24) der Rotorschaufel in Eingriff kommt.

4. Verfahren nach Anspruch 3, aufweisend Anordnen einer Halterungsstruktur benachbart der Rotorschaufel, die mit der Auflage (48) in Eingriff ist, und Vorsehen eines Eingriffs mit dem Plattformabschnitt (32) der Rotorschaufel zum Halten und Positionieren der Auflage (48) von dem Plattformabschnitt (32) der Rotorschaufel aus.

5. Verfahren nach Anspruch 3, aufweisend Anordnen einer Halterungsstruktur benachbart der Rotorschaufel, die mit der Auflage (248) in Eingriff ist, und Vorsehen eines Eingriffs mit dem Kragenabschnitt (12) der Rotorschaufel zum Halten und Positionieren der Auflage (248) von dem Kragenabschnitt (12) aus.

6. Verfahren nach Anspruch 5, wobei die Halterungsstruktur so ausgerichtet ist, dass sie sich nicht lateral über die Auflage (248) hinaus erstreckt und sich nicht radial eine erhebliche Strecke zwischen der Plattform (32) der Schaufel und der Strömungspfadoberfläche (42) des Kragens (12) erstreckt.

7. Verfahren nach irgendeinem der vorstehenden Ansprüche, wobei die Auflage (48;248;248a) eine Metallauflage mit einer thermischen Leitfähigkeit ist, die größer, ist als die thermische Leitfähigkeit des Kragens und des geschmolzenen Materials, wodurch Wärme während des Kühlens des geschmolzenen Materials von dem geschmolzenen Material, das dem Kragen und der Auflage benachbart ist, mit einer größeren Rate übertragen wird als von dem geschmolzenen Material, das dem Kragen benachbart ist, so dass die Viskosität des geschmolzenen Materials, das den angepassten Oberflächen des Kragens benachbart ist, erhöht wird.

8. Verfahren nach irgendeinem der vorstehenden Ansprüche, wobei die Auflage (48;248;248a) aus Metall besteht und eine vorbestimmte thermische Kapazität hat, so dass die Auflage nicht als eine Wärmesenke wirkt, die zu viel Wärme aus dem geschmolzenen Metall heraus überträgt und Rissbildung des sich verfestigenden geschmolzenen Materials verursacht.

9. Verfahren nach irgendeinem der vorstehenden Ansprüche, wobei die Auflage (48;248;248a) wenigstens eine Rotationsachse aufweist und wobei die Auflage um wenigstens eine Achse der Auflage rotiert wird, wenn die Auflage mit dem Kragen (12) in Eingriff kommt.

10. Verfahren nach Anspruch 9, wobei die Achse in Bezug auf die Oberfläche des Kragens (12) neigbar ist und die Auflage (48;248) um mindestens eine Achse der Auflage rotiert wird, indem die Rotationsachse in Bezug auf die Strömungspfadoberfläche (42) des Kragens (12) geneigt wird.

11. Verfahren nach Anspruch 1, wobei der Kragenabschnitt aus einem ersten Material hergestellt wird, ein Substrat zum Aufnehmen eines gehärteten Materials und eine Stelle einer Stirnfläche mit Kerbe (38) zum Eingriff mit einer zugehörigen Stelle einer Stirnfläche an einem benachbarten Strömungsprofil aufweist und eine dem Plattformabschnitt (26) des Strömungsprofils gegenüberliegende Strömungspfadfläche aufweist, wobei das Verfahren aufweist:
Vorsehen eines Eingriffs mit dem Plattformabschnitt (36) der Rotorschaufel auf entgegen gesetzten Seiten des Plattformabschnitts, um die Rotorschaufel an Bewegung zu hindern;
Elektrisches Erden der Rotorschaufel durch den Wurzelabschnitt (24) des Strömungsprofils;
Schmelzen von hartem Stirnflächenmaterial an der Stelle der Stirnfläche mit Kerbe des Kragens (38) durch Schweißen eines zweiten Materials an den Kragen, was den Schritt des Führens eines elektrischen Gleichstromlichtbogens durch die Stelle der Stirnfläche mit Kerbe des Kragens enthält, um das zweite Material zu formen, das bei Betriebsbedingungen eine Härte hat, die größer als die Härte des ersten Materials ist;
Blockieren des Fließens von geschmolzenem zweiten Material zu der Strömungspfadoberfläche des Kragens durch Drücken der Metallauflage (48;248) gegen die Strömungspfadoberfläche (42) des Kragens (12) während des Schweißens des zweiten Materials an die Stirnfläche mit Kerbe des Kragens, wobei die Metallauflage (48; 248) mindestens eine Rotationsachse hat, und durch Aufweisen des Schritts des Rotierens der Metallauflage (48;248;248a) um mindestens eine Achse der Auflage, wenn die Metallauflage (48;248) mit dem Kragen in Eingriff kommt, so dass die Kontur der Auflage (48;248) auf die Kontur der Unterseite des Kragens in einer angepassten Beziehung abgestimmt wird und so dass sich die Metallauflage (48;248) über den Kragen hinaus erstreckt, um das Fließen von geschmolzenem zweiten Material zu der Strömungspfadoberfläche (42) zu blockieren, wobei die Auflage eine höhere thermische Leitfähigkeit als das geschmolzene Material und der Kragen hat, um die Viskosität des geschmolzenen Materials, das den angepassten Oberflächen des Kragens und der Auflage benachbart ist, zu erhöhen.

12. Verfahren nach irgendeinem der vorstehenden Ansprüche, wobei während des Kühlens des geschmolzenen Materials die Auflage (48;248;248a) durch den Wärmetransfer auf eine Temperatur erwärmt wird, die weniger als die Hälfte des Schmelzpunkts der Auflage beträgt.

13. Kombination einer Rotorschaufel (10) mit einer Stelle (38) eines Kragens und einer Vorrichtung zur Verwendung beim Anbringen eines Bereichs von Material an der Stelle (38) des Kragens der Rotorschaufel (10), wobei die Rotorschaufel um eine Achse entlang der Spannweite angeordnet ist, wobei die Rotorschaufel ein erstes Ende mit einem Wurzelabschnitt (24), einen sich entlang der Spannweite erstreckenden Strömungsprofilabschnitt (35) und ein zweites Ende mit einem sich in Bezug auf den Strömungsprofilabschnitt (35) lateral erstreckenden Kragen (12) aufweist, wobei der Kragen eine Strömungsprofiloberfläche (42), eine obere Oberfläche, und eine Stelle einer Strinfläche des Kragens und ein Substrat zum Aufnehmen des gehärteten Materials anliegend an die Stelle der Stirnfläche des Kragens in geschmolzener Form aufweist, wobei die Vorrichtung aufweist:
eine Auflage (248;248a) mit einer Kontur, die der Kontur der Strömungspfadoberfläche (42) des Kragens entspricht und die die Auflage geeignet macht, mit der Strömungpfadoberfläche des Kragens in Eingriff zu sein, wobei die Oberfläche eingerichtet ist, sich lateral über die harte Stelle der Stirnfläche des Kragens hinaus zu erstrecken und über den Kragen hinaus zu erstrecken, so dass die Auflage in der Position in Eingriff das Fließen von geschmolzenem Material zu der Strömungspfadoberfläche des Kragens blockiert; und
eine Anordnung (252) zum Drücken der Auflage (248;248a) in Eingriff mit der Strömungspfadoberfläche (42) des Kragens, wobei die Anordnung von der Rotorschaufel aus an einer Stelle, die nicht nach innen von dem Strömungsprofil ist, gehalten und postioniert wird.

14. Kombination nach Anspruch 13, wobei die Auflage (248) rotierbar in Eingriff ist mit der Anordnung (252) zum Drücken der Auflage (248) in Eingriff mit dem Strömungspfadkragen.

15. Kombination nach Anspruch 14, wobei die Anordnung (252) zum Drücken der Auflage in Eingriff mit dem Strömungspfadkragen einen Arm (296) mit einer Öffnung hat, die von einer ersten Oberfläche (246) mit der Kontur eines Teils einer Kugel und von einer um eine Achse Aᵣ angeordneten zylindrischen Oberfläche (342) begrenzt ist, wobei sich die Achse Aᵣ durch die Mitte der Kugel erstreckt, und wobei die Auflage (248) einen zylindrischen Schaft (352) hat, der eine Rotationsachse As hat und mit der Rotationsachse Ar ausrichtbar ist, so dass der Schaft (352) in der Öffnung angeordnet ist und von der zylindrischen Oberfläche (342) des Arms (296) radial beabstandet ist, wobei die Auflage (248) weiterhin eine sphärisch geformte Oberfläche (348) hat, von der sich der Schaft erstreckt, wobei die sphärisch geformte Oberfläche rotierbar in Eingriff ist mit der sphärisch geformten Oberfläche der Anordnung (252) zum Drücken der Auflage (248) in Eingriff mit dem Strömungspfadkragen (12) und wobei die Auflage (248) rotierbar um die Achse As ist und die Achse As durch den Eingriff der sphärischen Oberflächen der Auflage (248) und des Arms (296) geneigt werden kann.

16. Kombination nach Anspruch 13, 14 oder 15, wobei die Anordnung (252) zum Drücken der Auflage (248) in Eingriff mit dem Strömungspfadkragen eine erste Backe (254) mit einer Oberfläche zum Eingriff mit einer Oberfläche an der Rotorschaufel an einer ersten Stelle und eine zweite Backe (264) mit einer Oberfläche zum Eingriff mit einer Oberfläche an der Rotorschaufel an einer von der ersten Stelle beabstandeten zweiten Stelle hat, wobei die Stellen nicht nach innen von dem Strömungsprofil gelegen sind, und weiterhin ein Element (272) zum Drücken der Backen (254,264) in Eingriff mit der Rotorschaufel (10) enthält.

17. Kombination nach Anspruch 16, wobei die erste Backe (254) einen Fortsatz (296) hat, der verschieblich und rotierbar an der Backe (254) angebracht ist und in der lateralen Richtung bewegbar ist.

18. Kombination nach Anspruch 17, wobei der Fortsatz (296) eine Öffnung (344) hat, die von einer ersten Oberfläche (346) mit der Kontur eines Teils einer Kugel und von einer um eine Achse Ar angeordneten zylindrischen Oberfläche (342) begrenzt ist, wobei sich die Achse Ar durch die Mitte der Kugel erstreckt, was den Fortsatz (296) geeignet macht, mit einer Oberfläche an einer Auflage (248) in Eingriff zu sein, und wobei die Auflage (248) einen zylindrischen Schaft (352) hat, der eine Rotationsachse As hat und mit der Rotationsachse Ar ausrichtbar ist, so dass der Schaft (352) in der Öffnung (344) der ersten Backe (254) angeordnet ist und von der zylindrischen Oberfläche (342) der ersten Backe (254) radial beabstandet ist, wobei die Auflage (248) eine erste Oberfläche (348) hat, die sphärisch geformt ist und rotierbar in Eingriff mit der sphärisch geformten Oberfläche (342) des Fortsatzes (296) ist und von der sich der Schaft (352) erstreckt.

19. Kombination nach Anspruch 16, 17 oder 18, wobei die Rotorschaufel, mit der die Vorrichtung verwendet werden soll, eine erste Seite und eine zweite Seite an der Strömungspfadoberfläche (42) des Kragens hat, wobei die erste Backe (254) eine erste Seite (274) zum Eingriff mit der ersten Seite der Strömungspfadoberfläche hat und die erste Backe (254) eine von der ersten Seite (274) lateral beabstandete zweite Seite (288) hat, an die der Fortsatz (296) angebracht ist, wobei die zweite Backe (264) lateral zwischen der ersten Seite (274) und der zweiten Seite (288) der ersten Backe (254) angeordnet ist, wobei die zweite Backe mit der Nicht-Strömungspfadseite des Kragens in Eingriff ist.

20. Kombination nach Anspruch 13, 14 oder 15, wobei die Rotorschaufel, mit der die Vorrichtung verwendet werden soll, eine erste Seite und eine zweite Seite an der Strömungspfadoberfläche (42) hat, wobei die Anordnung (252) zum Drücken der Auflage (248) in Eingriff mit der Strömungspfadoberfläche des Kragens ein Paar Backen (254,264) hat, wobei die erste Backe (254) eine erste Seite (274) zum Eingriff mit der ersten Seite der Strömungspfadoberfläche hat und die erste Backe (254) eine von der ersten Seite (274) lateral beabstandete zweite Seite (288) hat, an die der Fortsatz (296) angebracht ist, wobei die zweite Backe (264) lateral zwischen der ersten Seite (274) und der zweiten Seite (288) der ersten Backe (254) angeordnet ist, wobei die zweite Backe mit der Nicht-Strömungspfadseite des Kragens in Eingriff ist.

21. Kombination nach irgendeinem der Ansprüche 16 bis 20, wobei sich die Anordnung zum Drücken der Auflage (248) in Eingriff mit dem Strömungspfadkragen, die Backen hat, die mit dem Rotorblatt in Eingriff sind, nicht lateral über die Auflage (248) hinaus erstreckt und sich nicht von der Auflage (248) aus eine erhebliche Strecke in einem Bereich zwischen der Plattform (26) der Schaufel und der Strömungspfadoberfläche (42) des Kragens radial erstreckt, so dass die radiale Ausdehnung von Einrichtungen in jenem Bereich weniger als ein Viertel der Länge La des Strömungsprofils ist.

22. Kombination nach Anspruch 13 zur Verwendung beim Anbringen eines Bereichs von gehärtetem Material an der Stelle der Stirnfläche mit Kerbe (38) für eine Rotorschaufel, wobei die Rotorschaufel, die um eine Achse entlang der Spannweite herum angeordnet ist, ein erstes Ende mit einem Wurzelabschnitt (24), einen Plattformabschnitt (26), wobei der Plattformabschnitt (26) eine erste Seite und eine zweite Seite hat, die sich in Bezug auf die Achse entlang der Spannweite lateral erstrecken, einen sich entlang der Spannweite erstreckenden Strömungsprofilabschnitt (35) und ein zweites Ende mit einem Kragen (12) aufweist, der sich in Bezug auf das Strömungsprofil lateral erstreckt, wobei der Kragen eine Strömungspfadoberfläche (42) mit einer ersten Seite und einer zweiten Seite, eine obere Oberfläche, und eine Stelle einer Stirnfläche mit Kerbe (38) und ein Substrat zum Aufnehmen des gehärteten Materials anliegend an die Stelle der Stirnfläche mit Kerbe in geschmolzener Form hat, wobei die Kombination aufweist:
die Anordnung (252) zum Drücken der Auflage (248) in Eingriff mit der Strömungspfadoberfläche des Kragens, wobei die Anordnung ein Paar Backen (254, 264) aufweist, die um eine Achse A der Anordnung herum angeordnet ist und zu der Achse A bewegbar sind, wobei das Paar Backen eine erste Backe (254) und eine zweite Backe (264) aufweist, wobei die Anordnung aufweist
ein elastisches Element (272) zum Zusammendrücken der Backen,
wobei die erste Backe (254) aufweist
eine erste Seite (274) mit einem Stift (276) und einem Paar von beabstandeten Flächen (278) und einem zwischen den Flächen angeordneten ersten Fortsatz (282) mit einem Schlitz (284), in dem der Stift (276) angeordnet ist, so dass der Fortsatz verschieblich und rotierbar an der Backe in der Längsrichtung und der lateralen Richtung angebracht ist, wobei der erste Fortsatz eine Oberfläche hat, die den Fortsatz geeignet macht, mit einer Strömungspfadoberfläche (42) an der ersten Seite des Kragens in Eingriff zu sein;
eine zweite Seite (288) mit einem Stift (292) und einem Paar von beabstandeten Flächen (294) und einem zwischen den Flächen angeordneten zweiten Fortsatz (296) mit einem Schlitz (298), in dem der Stift (292) angeordnet ist, so dass der zweite Fortsatz verschieblich und rotierbar an der Backe in der Längsrichtung und der lateralen Richtung angebracht ist, wobei der zweite Fortsatz (296) eine Öffnung (344) hat, die von einer ersten Oberfläche (346) mit der Kontur eines Teils einer Kugel und von einer um eine Achse Ar angeordneten zylindrischen Oberfläche (342) begrenzt wird, wobei sich die Achse Ar durch die Mitte der Kugel erstreckt, was den Fortsatz (296) geeignet macht, mit einer Oberfläche an einer Auflage (248) in Eingriff zu sein;
wobei die zweite Backe (264) lateral zwischen der ersten Seite (274) und der zweiten Seite (288) der ersten Backe (254) angeordnet ist, wobei die zweite Backe (264) eine Oberfläche hat, die die zweite Backe geeignet macht, mit der Nicht-Strömungspfadseite des Kragens in Eingriff zu sein;
wobei die Auflage (248) einen zylindrischen Schaft (352) hat, der eine Rotationsachse As hat und mit der Rotationsachse Ar ausrichtbar ist, so dass der Schaft (352) in der Öffnung (344) der ersten Backe (254) angeordnet ist und von der zylindrischen Oberfläche (342) der ersten Backe (254) radial beabstandet ist, wobei die Auflage (248) aufweist
eine erste Oberfläche (348), die sphärisch geformt ist und die rotierbar in Eingriff ist mit der sphärisch geformten Oberfläche des zweiten Fortsatzes (296) und von der sich der Schaft (352) erstreckt,
eine zweite Oberfläche (250) mit zwei Punkten auf der zweiten Oberfläche, die mit dem Punkt auf der Oberfläche der ersten Seite eine Ebene in der Betriebsstellung definieren, die sich lateral erstreckt und im Wesentlichen parallel zu der Strömungspfadoberfläche des Kragens ist, wobei die zweite Oberfläche (250) eine Kontur hat, die der Kontur der Strömungspfadoberfläche (42) des Kragens genau entspricht und die die Auflage geeignet macht, mit der Strömungpfadoberfläche des Kragens in Eingriff zu sein, und die sich lateral über die harte Stelle der Stirnfläche des Kragens hinaus erstreckt und sich über den Kragen hinaus erstreckt, so dass die Auflage in der Position in Eingriff das Fließen von geschmolzenem Material zu der Strömungspfadoberfläche des Kragens blockiert;
wobei die Backen (254,264) der Anordnung eingerichtet sind, mit dem Kragen der Rotorschaufel in Eingriff zu sein, und das elastische Element (272) die Backen gegen die Strömungspfadoberfläche und die Nicht-Strömungspfadoberfläche des Kragens drückt, um die Auflage von dem Kragen aus in der Betriebsstellung zu halten und zu positionieren;
wobei die Fortsätze (282,296) laterale Anpassung der ersten Backe (254) in Bezug auf den Kragen (10) der Rotorschaufel erlauben, um Eingriff zwischen der Auflage und der Strömungspfadoberfläche des Kragens zu erleichtern und Eingriff des Kragens ohne sich zwischen dem Strömungsprofil und dem Kragen und sich lateral von der Auflage nach außen erstreckende Struktur zu ermöglichen;
wobei die Auflage (248) um die Achse As herum rotierbar ist und die Achse As neigbar ist durch den Eingriff der sphärischen Oberflächen an der Auflage und an dem zweiten Fortsatz (296), um der zweiten Oberfläche des Kragens zu ermöglichen, geringen Abweichungen in der Ausrichtung des Kragens in Bezug auf die Vorrichtung Rechnung zu tragen, und wobei die Auflage der zweiten Oberfläche ermöglicht, mit der Strömungspfadoberfläche des Kragens in Eingriff zu sein;
wobei wenigstens der an die zweite Oberfläche angrenzende Teil der Auflage (248) aus einem Material gebildet ist, das eine thermische Leitfähigkeit hat, die mindestens das Vierfache der thermischen Leitfähigkeit des geschmolzenen Materials und des Kragens bei Betriebstemperaturen ist, um Wärme von dem geschmolzenen Material, das der Linie des angepassten Kontakts zwischen dem Kragen und der Auflage benachbart ist, wegzuleiten, um das geschmolzene Material an der Linie des angepassten Kontakts zu kühlen, um zu verursachen, dass das geschmolzene Material an jener Stelle zähflüssiger wird, um die Leckage von geschmolzenem Material zu der Strömungspfadoberfläche des Kragens zu blockieren; und
wobei die Auflage (248) eine thermische Kapazität hat, die geringer ist als die thermische Kapazität des Kragens, um zu verhindern, dass die Auflage (248) als eine Wärmesenke wirkt und das geschmolzene Material reisst, wenn es abkühlt.

23. Kombination einer Rotorschaufel (10) mit einer Stelle einer Stirnfläche des Kragens (38) und einer Vorrichtung zur Verwendung beim Anbringen eines Bereichs von Material an der Stelle der Stirnfläche des Kragens (38) der Rotorschaufel (10), wobei die Rotorschaufel (10) um eine Achse entlang der Spannweite herum angeordnet ist, wobei die Rotorschaufel ein erstes Ende mit einem Wurzelabschnitt (24), einen sich entlang der Spannweite erstreckenden Strömungsprofilabschnitt (35) und ein zweites Ende mit einem sich in Bezug auf den Strömungsprofilabschnitt (35) lateral erstreckenden Kragen (12) aufweist, wobei der Kragen eine Stelle einer Stirnfläche des Kragens (38) und ein Substrat zum Aufnehmen des gehärteten Materials anliegend an die Stelle der Stirnfläche des Kragens in geschmolzener Form aufweist, wobei die Vorrichtung aufweist:
eine Basis (54) zum Eingriff mit der Rotorschaufel (10);
eine Auflage (48) mit einer Kontur, die die Auflage geeignet macht, mit der Strömungpfadoberfläche des Kragens in Eingriff zu sein, wobei die Oberfläche der Kontur (50) eingerichtet ist, sich lateral über die harte Stelle der Stirnfläche des Kragens hinaus zu erstrecken und über den Kragen hinaus zu erstrecken, so dass die Auflage in der Position in Eingriff das Fließen von geschmolzenem Material zu der Strömungspfadoberfläche des Kragens blockiert; und
eine Anordnung (52) zum Drücken einer Auflage (48) in Eingriff mit der Strömungspfadoberfläche (42) des Kragens.

24. Kombination nach Anspruch 23, wobei die Auflage (48) rotierbar in Bezug auf die Anordnung (52) angebracht ist.

25. Kombination nach Anspruch 23 oder 24, wobei die Anordnung zum Drücken der Auflage (48) in Eingriff mit dem Strömungspfadkragen ein Gehäuse (52) mit einer Passage (102), einem in der Passage (102) angeordneten elastischen Element (112) mit einem ersten Ende, das mit dem Gehäuse (52) in Eingriff ist, und einem zweiten Ende, das mit einer in der Passage (102) angeordneten Stange in Eingriff sein kann, die mit dem elastischen Element (112) in Eingriff ist, wobei die Stange an die Auflage (48) angebracht ist, um die Auflage in Eingriff mit der Strömungspfadoberfläche (42) des Kragens zu drücken.

26. Kombination nach Anspruch 25, wobei die Stange (118) ein erstes Ende hat, das mit dem elastischen Element (112) in Eingriff ist, und ein zweites Ende hat, das sich über die Passage hinaus erstreckt und einen Kanal (126) hat, der die Stange geeignet macht, einen Arm (128) verschieblich aufzunehmen, der sich durch den Kanal (126) in der Stange (118) erstreckt und ein von der Stange (118) beabstandetes Ende hat, das an die Auflage (48) angebracht ist.

27. Kombination nach irgendeinem der Ansprüche 23 bis 26, wobei die Basis (54) eine Passage (56) hat, die die Basis geeignet macht, das erste Ende der Rotorschaufel aufzunehmen.

28. Kombination nach irgendeinem der Ansprüche 23 bis 27, wobei die Vorrichtung eine Bodenanordnung mit einem Boden (96), der mit dem Wurzelabschnitt der Rotorschaufel in Eingriff sein kann, und eine Einrichtung (98) zum Drücken des Bodens (96) und der Rotorschaufel (10) in anliegenden Kontakt enthält.

29. Kombination nach Anspruch 23 zur Verwendung beim Anbringen eines Bereichs von gehärtetem Material an der Stelle der Strinfläche mit Kerbe (38) für eine Rotorschaufel (10), wobei die Rotorschaufel, die um eine Achse entlang der Spannweite herum angeordnet ist, ein erstes Ende mit einem Wurzelabschnitt (24), einen Plattformabschnitt (26), der eine erste und eine zweite Seite hat, die sich lateral in Bezug auf die Achse entlang der Spannweite erstrecken, einen sich entlang der Spannweite erstreckenden Strömungsprofilabschnitt (35) und ein zweites Ende mit einem sich in Bezug auf den Strömungsprofilabschnitt lateral erstreckenden Kragen aufweist, wobei der Kragen eine Stelle einer Stirnfläche mit Kerbe und ein Substrat zum Aufnehmen des gehärteten Materials anliegend an die Stelle der Stirnfläche mit Kerbe in geschmolzener Form aufweist,
wobei die Basis (54) eine Passage (56) hat, die die Basis geeignet macht, das erste Ende der Rotorschaufel (10) aufzunehmen, wobei die Basis weiterhin aufweist
eine erste Oberfläche (60), die nach außen gerichtet ist und einen Teil der Passage (56) begrenzt,
eine zweite Oberfläche (62), die nach außen gerichtet ist und einen Teil der Passage (56) begrenzt,
eine Öffnung der Passage (56), die sich nach innen von der ersten und der zweiten Oberfläche erstreckt und die die Basis geeignet macht, den Wurzelabschnitt (24) der Rotorschaufel (10) aufzunehmen,
eine Klemme (64) mit einem Paar von sich lateral erstreckenden Armen (66,68), wobei die Arme beabstandet sind und einen Abstand (G) dazwischen lassen, wobei der Abstand (G) die Klemme geeignet macht, sich auf beiden Seiten des Strömungsprofils zu erstrecken,
wobei jeder der Arme (66,68) einen Vorsprung (72,74) hat, der sich von dem Arm erstreckt und die Klemme geeignet macht, mit einer der Seiten des Plattformabschnitts (26) einer Rotorschaufel in der Betriebsstellung in Eingriff zu sein, um den Plattformabschnitt zwischen die Arme der Klemme und die nach außen gerichtete erste und zweite Oberfläche der Öffnung zu klemmen,
wobei ein Abstandsgeber (84) ein erstes Ende (86), das mit den Armen der Klemme in Eingriff ist, und ein zweites Ende (88) hat, das eingerichtet ist, mit dem Kopf eines Schraubbefestigungselements (76) in Eingriff zu sein, wobei der Abstandsgeber weiterhin eine Öffnung hat, die sich von dem ersten Ende zu dem zweiten Ende des Abstandsgebers erstreckt und den Abstandsgeber geeignet macht, einen Stab (78) des Schraubbefestigungselements (76) aufzunehmen,
wobei das Schraubbefestigungselement (76) einen Stab (78) hat, der gewindemäßig mit der Basis zum Drücken der Arme (72,74) der Klemme (64) gegen den Plattformabschnitt der Rotorschaufel in Eingriff ist, wobei das Schraubbefestigungselement (76) einen Kopf (82) hat, der mit einem Ende des Abstandsgebers in Eingriff ist zum Drücken des Abstandsgebers gegen die Arme der Klemme,
einen sich von der Öffnung nach innen erstreckenden Kanal (92), der eingerichtet ist, einen Bodenblock (96) aufzunehmen;
eine Bodenanordnung (94), die aufweist
einen in dem Kanal (92) angeordneten Bodenblock (96), der eingerichtet ist, mit dem Wurzelabschnitt (24) der Rotorschaufel in Eingriff zu sein,
ein elastisches Element (98), das unter Betriebsbedingungen eine Kraft auf den Bodenblock (96) ausüben kann zum Drücken des Bodenblocks in anliegenden Kontakt mit dem Rotorschaufel(10)-Element,
wobei die Anordnung (52) eine Gehäuseanordnung (52) zum Drücken einer Auflagenanordnung in Eingriff mit der Strömungspfadoberfläche des Kragenabschnitts ist, wobei die Gehäuseanordnung aufweist:
ein Gehäuse mit einer Passage (102) mit einem ersten Ende (104), das eingerichtet ist, mit einem elastischen Element (112) in Eingriff zu sein, und mit einem zweiten Ende mit einer Öffnung, was die Passage geeignet macht, eine Stange (118) aufzunehmen,
ein in der Passage (102) angeordnetes elastisches Element (112) mit einem ersten Ende, das mit dem ersten Ende (104) der Passage (102) in Eingriff ist, und mit einem sich über die Passage hinaus erstreckenden zweiten Ende, das einen Kanal (126) hat, der die Stange (118) geeignet macht, einen Arm (128) aufzunehmen,
einen Arm (128), der sich durch den Kanal (126) in der Stange erstreckt, um verschieblich mit der Stange in Eingriff zu sein, und der ein von der Stange beabstandetes Ende hat, wobei das Ende eine Öffnung (142) hat, die von einer ersten Oberfläche (144) mit der Kontur eines Teils einer Kugel und von einer um eine Achse Aᵣ angeordneten zylindrischen Oberfläche begrenzt ist, wobei sich die Achse Aᵣ durch die Mitte der Kugel erstreckt,
ein Schraubbefestigungselement (132), der gewindemäßig mit der Stange (118) in Eingriff ist und der sich zu dem Kanal (126) erstreckt zum Ausüben einer Kraft auf den Arm (126), um den Arm gegen Bewegung zu sichern,
wobei die Auflage (48) einen zylindrischen Schaft (152) hat, der eine Rotationsachse As hat und mit der Rotationsachse Ar ausrichtbar ist, so dass der Schaft (152) in der Öffnung angeordnet ist und von der zylindrischen Oberfläche des Arms (128) radial beabstandet ist, wobei die Auflage aufweist
eine erste Oberfläche (148), von der sich der Schaft (152) erstreckt, wobei die erste Oberfläche die Kontur eines Teils einer Kugel hat, und die rotierbar in Eingriff mit der sphärisch geformten Oberfläche des Arms (128) ist,
eine zweite Oberfläche (50) mit einer Kontur, die der Kontur der Strömungspfadoberfläche des Kragens genau entspricht und die die Auflage (48) geeignet macht, mit der Strömungspfadoberfläche (42) des Kragens in Eingriff zu sein, und die sich lateral über die Stelle der harten Stirnfläche des Kragens hinaus und über den Kragen hinaus erstreckt, so dass die Auflage (48) in der Position in Eingriff das Fließen von geschmolzenem Material zu der Strömungspfadoberfläche des Kragens blockiert,
wobei das elastische Element (98) die Stange (118) nach außen und gegen die Strömungspfadoberfläche des Kragens drückt, um Höhenunterschieden zwischen Rotorschaufeln Rechnung zu tragen;
wobei das Schraubbefestigungselement (132) mit dem Arm (128) in Eingriff ist, um laterale Anpassung des Arms in Bezug auf den Kragen der Rotorschaufel zu erlauben;
wobei die Auflage (48) um die Achse As herum rotierbar ist und die Achse As neigbar ist durch den Eingriff der sphärischen Oberflächen an der Auflage (48) und an dem Arm (128), um der zweiten Oberfläche des Kragens zu ermöglichen, geringen Abweichungen in der Ausrichtung des Kragens in Bezug auf die Vorrichtung Rechnung zu tragen, und wobei die Auflage der zweiten Oberfläche ermöglicht, mit der Strömungspfadoberfläche des Kragens in Eingriff zu sein;
wobei wenigstens der an die zweite Oberfläche angrenzende Teil der Auflage (48) aus einem Material gebildet ist, das eine thermische Leitfähigkeit hat, die mindestens das Vierfache der thermischen Leitfähigkeit des geschmolzenen Materials und des Kragens bei Betriebstemperaturen ist, um Wärme von dem geschmolzenen Material, das der Linie des angepassten Kontakts zwischen dem Kragen und der Auflage benachbart ist, wegzuleiten, um das geschmolzene Material an der Linie des angepassten Kontakts zu kühlen, um zu verursachen, dass das geschmolzene Material an jener Stelle zähflüssiger wird, um die Leckage von geschmolzenem Material zu der Strömungspfadoberfläche des Kragens zu blockieren; und
wobei die Auflage (48) eine thermische Kapazität hat, die geringer ist als die thermische Kapazität des Kragens, um zu verhindern, dass die Auflage als eine Wärmesenke wirkt und das geschmolzene Material reisst, wenn es abkühlt.

30. Kombination nach irgendeinem der Ansprüche 14 bis 29, wobei die Auflage (48;248;248a) aus Metall ist.

31. Kombination nach Anspruch 30, wobei die Auflage (48;248;248a) aus Wolfram ist.

32. Kombination nach irgendeinem der Ansprüche 13 bis 31, wobei die Auflage (48;248;248a) aus einem Material gebildet ist, das einen Schmelzpunkt hat, der höher als der Schmelzpunkt des Kragenmaterials und des harten Materials der Stirnfläche ist.

33. Kombination nach Anspruch 32, wobei die Auflage (48;248;248a) aus einem Material gebildet ist, das einen Schmelzpunkt hat, der mindestens drei Mal so hoch wie der Schmelzpunkt des Kragenmaterials und des harten Materials der Stirnfläche ist.

34. Kombination nach irgendeinem der Ansprüche 14 bis 33, wobei mindestens der dem Substrat benachbarte Teil der Auflage (48;248;248a) aus einem Material gebildet ist, das eine thermische Leitfähigkeit hat, die größer als die thermische Leitfähigkeit des geschmolzenen Materials und des Kragens bei Betriebstemperaturen ist.

35. Kombination nach Anspruch 34, wobei das Material der Auflage (48;248;248a) mindestens das Vierfache der thermischen Leitfähigkeit des geschmolzenen Materials und des Kragens bei Betriebstemperaturen hat.

36. Kombination nach irgendeinem der Ansprüche 13 bis 35, wobei die Auflage (48;248;248a) eine thermische Kapazität hat, die geringer als die thermische Kapazität des Kragens ist, um zu verhindern, dass die Auflage als eine Wärmesenke wirkt und das geschmolzene Material reisst, wenn es abkühlt.

## Revendications

1. Méthode pour disposer une région de matière (154) à un emplacement de face de carénage (38) d'une pale de rotor (10), la pale de rotor comprenant une section de pied (24), une section de plate-forme (26), une section de surface portante (35) qui s'étend vers l'extérieur dans le sens de l'envergure à partir de la section de pied (24), une section de carénage (12) qui s'étend latéralement par rapport à la section de surface portante, la section de carénage présentant un emplacement de face de carénage et un substrat pour recevoir une matière et présentant une surface de chemin d'écoulement (42) qui fait face à la section de plate-forme (26) de la surface portante, la méthode comprenant l'étape consistant à former un bain de matière en fusion à proximité du substrat en faisant fondre la matière à l'emplacement du substrat sur le carénage, la méthode étant **caractérisée par** les étapes supplémentaires suivantes:
bloquer l'écoulement de la matière en fusion vers la surface de chemin d'écoulement du carénage en poussant un tampon (48; 248; 248a) contre la surface de chemin d'écoulement (42) du carénage qui épouse étroitement le contour de la surface de chemin d'écoulement et qui s'étend au-delà du carénage; et
refroidir la matière en fusion et le carénage tout en poussant le tampon (48; 248; 248a) contre la surface de chemin d'écoulement du carénage jusqu'à ce que la matière en fusion se solidifie.

2. Méthode selon la revendication 1, dans laquelle le tampon (48; 248; 248a) est poussé contre là surface de chemin d'écoulement (42) du carénage avec une force élastique, de telle sorte que le tampon résiste à un mouvement de désengagement hors de la surface de chemin d'écoulement du carénage avec une force restauratrice.

3. Méthode selon la revendication 1 ou 2, dans laquelle le tampon (48; 248; 248a) est orienté par rapport à la surface de chemin d'écoulement (42) du carénage en engageant la pale dé rotor vers l'extérieur de la section de pied (24) de la pale de rotor.

4. Méthode selon la revendication 3, comprenant la disposition d'une structure de support à proximité de la pale de rotor qui engage le tampon (48) et qui engage la section de plate-forme (32) de la pale de rotor pour supporter et positionner le tampon (48) à partir de la section de plate-forme (32) de la pale de rotor.

5. Méthode selon la revendication 3, comprenant la disposition d'une structure de support à proximité de la pale de rotor qui engage le tampon (248) et qui engage la section de carénage (12) de la pale de rotor pour supporter et positionner le tampon (248) à partir de la section de carénage (12).

6. Méthode selon la revendication 5, dans laquelle la structure de support est orientée de telle sorte qu'elle ne s'étende pas latéralement au-delà du tampon (248) et qu'elle ne s'étende pas radialement sur une distance substantielle entre la plate-forme (32) de la pale et la surface de chemin d'écoulement (42) du carénage (12).

7. Méthode selon l'une quelconque des revendications précédentes, dans laquelle le tampon (48; 248; 248a) est un tampon de métal qui présente une conductivité thermique qui est supérieure à la conductivité thermique du carénage et de la matière en fusion, par laquelle, pendant le refroidissement de la matière en fusion, de la chaleur est transférée de la matière en fusion située à proximité du carénage et du tampon à une plus grande vitesse que de la matière en fusion située à proximité du carénage, de telle sorte que la viscosité de la matière en fusion à proximité des surfaces de contact du carénage soit accrue.

8. Méthode selon l'une quelconque des revendications précédentes, dans laquelle le tampon (48; 248; 248a) est un tampon de métal et présente une capacitance thermique prédéterminée, de telle sorte que le tampon n'agisse pas comme un puits de chaleur en transférant une trop grande quantité de chaleur hors de la matière en fusion, entraînant une fissuration de la matière en fusion en cours de solidification.

9. Méthode selon l'une quelconque des revendications précédentes, dans laquelle le tampon (48; 248) comprend au moins un axe de rotation, et dans laquelle le tampon tourne autour d'au moins un axe du tampon lorsque le tampon engage le carénage (12).

10. Méthode selon la revendication 9, dans laquelle l'axe est inclinable par rapport à la surface du carénage (12); et le tampon (48; 248) tourne autour d'au moins un axe du tampon en inclinant l'axe de rotation par rapport à la surface de chemin d'écoulement (42) du carénage (12).

11. Méthode selon la revendication 1, dans laquelle la section de carénage est constituée d'une première matière, comprend un substrat destiné à recevoir une matière durcie et un emplacement de face d'encoche (38) destiné à engager un emplacement de face associé sur une surface portante adjacente, et comprend une surface de chemin d'écoulement (42) qui fait face à la section de plate-forme (26) de la surface portante, la méthode comprenant les étapes suivantes:
engager la section de plate-forme (36) de la pale de rotor sur des côtés opposés de la section de plate-forme pour empêcher la pale de rotor de se déplacer;
mettre à la masse électriquement la pale de rotor par l'intermédiaire de la section de pied (24) de la surface portante;
faire fondre la matière de face dure à l'emplacement de face d'encoche de carénage (38) en soudant une deuxième matière sur le carénage, comprenant l'étape consistant à faire passer un arc électrique en courant continu à travers l'emplacement de face d'encoche de carénage pour former la deuxième matière dont la dureté dans les conditions de fonctionnement est supérieure à la dureté de la première matière;
bloquer l'écoulement de la deuxième matière en fusion vers la surface de chemin d'écoulement du carénage en poussant ledit tampon de métal (48; 248) contre la surface de chemin d'écoulement (42) du carénage (12) tout en soudant la deuxième matière sur la face d'encoche de carénage, le tampon de métal (48; 248) présentant au moins un axe de rotation, et la méthode comprenant l'étape consistant à faire tourner le tampon de métal (48; 248; 248a) autour d'au moins un axe du tampon lorsque le tampon de métal (48; 248) engage le carénage, de telle sorte que le contour du tampon (48; 248) coïncide avec le contour de la face inférieure du carénage dans une relation de contact, et de telle sorte que le tampon de métal (48; 248) s'étende au-delà du carénage pour bloquer l'écoulement de la deuxième matière en fusion vers la surface de chemin d'écoulement (42), ledit tampon présentant une conductivité thermique supérieure à celle de la matière en fusion et du carénage de manière à augmenter la viscosité de la matière en fusion à proximité des surfaces de contact du carénage et du tampon.

12. Méthode selon l'une quelconque des revendications précédentes, dans laquelle, pendant le refroidissement de la matière en fusion, le tampon (48; 248; 248a) est chauffé par le transfert de chaleur à une température qui est inférieure à la moitié du point de fusion du tampon.

13. En combinaison, pale de rotor (10) comprenant un emplacement de carénage (38) et fixation à utiliser pour disposer une région de matière à l'emplacement de carénage (38) de la pale de rotor (10), la pale de rotor étant disposée autour d'un axe dans le sens de l'envergure, la pale de rotor présentant une première extrémité comprenant une section de pied (24), une section de surface portante (35) qui s'étend dans le sens de l'envergure, et une deuxième extrémité comprenant un carénage (12) qui s'étend latéralement par rapport à la section de surface portante (35), le carénage comprenant une surface de chemin d'écoulement (42) et une surface supérieure, un emplacement de face de carénage et un substrat destiné à recevoir la matière durcie à proximité de l'emplacement de face de carénage sous forme fondue, la fixation comprenant:
un tampon (248; 248a) présentant un contour qui coïncide avec le contour de la surface de chemin d'écoulement (42) du carénage et qui adapte le tampon pour engager la surface de chemin d'écoulement du carénage, la surface étant adaptée pour s'étendre latéralement au-delà de l'emplacement de face dure du carénage et au-delà du carénage, de telle sorte que le tampon dans la position engagée bloque l'écoulement de la matière en fusion vers la surface de chemin d'écoulement du carénage; et
un ensemble (252) pour pousser ledit tampon (248; 248a) en engagement avec la surface de chemin d'écoulement (42) du carénage, l'ensemble étant supporté et positionné à partir de la pale de rotor à un endroit qui n'est pas orienté vers l'intérieur de la surface portante.

14. Combinaison selon la revendication 13, dans laquelle le tampon (248) engage de façon rotative l'ensemble (252) pour pousser le tampon (248) en engagement avec le carénage du chemin d'écoulement.

15. Combinaison selon la revendication 14, dans laquelle l'ensemble (252) pour pousser le tampon en engagement avec le carénage du chemin d'écoulement comprend un bras (296) qui comporte une ouverture définie par une première surface (246) qui présente le contour d'une partie d'une sphère, et par une surface cylindrique (342) disposée autour d'un axe Aᵣ, l'axe Aᵣ s'étendant à travers le centre de la sphère, et dans laquelle le tampon (248) comprend un arbre cylindrique (352) qui présente un axe de rotation Aₛ et qui peut être aligné avec l'axe de rotation Aᵣ, de telle sorte que l'arbre (352) soit disposé dans l'ouverture et soit espacé radialement de la surface cylindrique (342) du bras (296), le tampon (248) présentant en outre une surface de forme sphérique (348) à partir de laquelle l'arbre (352) s'étend, la surface de forme sphérique engageant de façon rotative la surface de forme sphérique de l'ensemble (252) pour pousser le tampon (248) en engagement avec le carénage du chemin d'écoulement (12), et dans laquelle le tampon (248) peut tourner autour de l'axe Aₛ, et où l'axe Aₛ peut être incliné par l'intermédiaire de l'engagement des surfaces sphériques sur le tampon (248) et sur le bras (296).

16. Combinaison selon la revendication 13, 14 ou 15, dans laquelle l'ensemble (252) pour pousser le tampon (248) en engagement avec le carénage du chemin d'écoulement comprend une première mâchoire (254) qui présente une surface pour engager une surface sur la pale de rotor à un premier endroit, et une deuxième mâchoire (264) qui présente une surface pour engager une surface sur la surface portante à un deuxième endroit qui est espacé du premier endroit, lesdits endroits n'étant pas situés vers l'intérieur de la surface portante, et comprend en outre un élément (272) pour pousser les mâchoires (254, 264) en engagement avec la pale de rotor (10).

17. Combinaison selon la revendication 16, dans laquelle la première mâchoire (254) comprend un appendice (296) qui est fixé de façon coulissante et rotative à la mâchoire (254) et qui est mobile dans la direction latérale.

18. Combinaison selon la revendication 17, dans laquelle l'appendice (296) comporte une ouverture (344) définie par une première surface (346) qui présente le contour d'une partie d'une sphère, et par une surface cylindrique (342) disposée autour d'un axe Aᵣ, l'axe Aᵣ s'étendant à travers le centre de la sphère qui adapte l'appendice (296) pour engager une surface sur un tampon (248), et dans laquelle le tampon (248) comprend un arbre cylindrique (352) qui présente un axe de rotation Aₛ et qui peut être aligné avec l'axe de rotation Aᵣ, de telle sorte que, l'arbre (352) soit disposé dans l'ouverture (344) de la première mâchoire (254) et soit espacé radialement de la surface cylindrique (342) de la première mâchoire (254), le tampon (248) présentant une première surface (348) qui est de forme sphérique et qui engage de façon rotative la surface de forme sphérique (342) de l'appendice (296) et à partir de laquelle l'arbre (352) s'étend.

19. Combinaison selon la revendication 16, 17 ou 18, dans laquelle la pale de rotor avec laquelle il est prévu que la fixation soit utilisée présente un premier côté et un deuxième côté sur la surface de chemin d'écoulement (42) du carénage, dans laquelle la première mâchoire (254) présente un premier côté (274) pour engager le premier côté de la surface de chemin d'écoulement, et la première mâchoire (254) présente un deuxième côté (288) espacé latéralement du premier côté (274) auquel l'appendice (296) est fixé, la deuxième mâchoire (264) étant disposée latéralement entre le premier côté (274) et le deuxième côté (288) de la première mâchoire (254), la deuxième mâchoire engageant le côté de chemin sans écoulement du carénage.

20. Combinaison selon la revendication 13, 14 ou 15, dans laquelle la pale de rotor avec laquelle il est prévu que la fixation soit utilisée présente un premier côté et un deuxième côté sur la surface de chemin d'écoulement (42), dans laquelle l'ensemble (252) pour pousser le tampon (248) en engagement avec la surface de chemin d'écoulement du carénage comprend une paire de mâchoires (254, 264), dans laquelle la première mâchoire (254) présente un premier côté (274) pour engager le premier côté de la surface de chemin d'écoulement, et la première mâchoire (254) présente un deuxième côté (288) espacé latéralement du premier côté (274) auquel l'appendice (296) est fixé, la deuxième mâchoire (264) étant disposée latéralement entre le premier côté (274) et le deuxième côté (288) de la première mâchoire (254), la deuxième mâchoire engageant le côté de chemin sans écoulement du carénage.

21. Combinaison selon l'une quelconque des revendications 16 à 20, dans laquelle l'ensemble pour pousser le tampon (248) en engagement avec le carénage du chemin d'écoulement comprenant des mâchoires qui engagent la pale de rotor ne s'étend pas latéralement au-delà du tampon (248) et ne s'étend pas radialement à partir du tampon (248) sur une distance substantielle dans une région située entre la plate-forme (26) de la pale et la surface de chemin d'écoulement (42) du carénage, de telle sorte que l'étendue radiale de moyens dans cette région soit inférieure à un quart de la longueur La de la surface portante.

22. Combinaison selon la revendication 13, à utiliser pour disposer une région de matière durcie à l'emplacement de face d'encoche (38) pour une pale de rotor, la pale de rotor étant disposée autour d'un axe dans le sens de l'envergure présentant une première extrémité comprenant une section de pied (24) et une section de plate-forme (26), la section de plate-forme (26) présentant un premier côté et un deuxième côté qui s'étendent latéralement par rapport à l'axe dans le sens de l'envergure, comprenant une section de surface portante (35) qui s'étend dans le sens de l'envergure et qui présente une deuxième extrémité comprenant un carénage (12) qui s'étend latéralement par rapport à la surface portante, le carénage comprenant une surface de chemin d'écoulement (42) qui présente un premier côté et un deuxième côté, et une surface supérieure, un emplacement de face d'encoche (38) et un substrat destiné à recevoir la matière durcie à proximité de l'emplacement de face d'encoche sous forme fondue, la combinaison comprenant:
ledit ensemble (252) pour pousser ledit tampon (248) en engagement avec la surface de chemin d'écoulement (48) du carénage, l'ensemble comprenant une paire de mâchoires (254, 264) disposées autour et mobiles en direction d'un axe A de l'ensemble, la paire de mâchoires comprenant une première mâchoire (254) et une deuxième mâchoire (264), l'ensemble comprenant:
un élément élastique (272) pour pousser les mâchoires ensemble,
la première mâchoire (254) présentant:
un premier côté (274) comportant une broche (276) et une paire de surfaces espacées (278), et un premier appendice (282) disposé entre les surfaces et comportant une fente (284) dans laquelle la broche (276) est disposée, de telle sorte que l'appendice (282) soit fixé de façon coulissante et rotative à la mâchoire dans les directions longitudinale et latérale, le premier appendice présentant une surface qui adapte l'appendice pour engager une surface de chemin d'écoulement (42) sur le premier côté du carénage;
un deuxième côté (288) comportant une broche (292) et une paire de surfaces espacées (294), et un deuxième appendice (296) disposé entre les surfaces et comportant une fente (298) dans laquelle la broche (292) est disposée, de telle sorte que le deuxième appendice (296) soit fixé de façon coulissante et rotative à la mâchoire dans les directions longitudinale et latérale, le deuxième appendice (296) comportant une ouverture (344) définie par une première surface présentant le contour d'une partie d'une sphère, et une surface cylindrique (342) disposée autour d'un axe Aᵣ, l'axe Aᵣ s'étendant à travers le centre de la sphère qui adapte l'appendice pour engager une surface sur un tampon (248);
la deuxième mâchoire (264) étant disposée latéralement entre le premier côté (274) et le deuxième côté (288) de la première mâchoire (254), la deuxième mâchoire (264) présentant une surface qui adapte la deuxième mâchoire pour engager le côté de chemin sans écoulement du carénage;
ledit tampon (248) comprenant un arbre cylindrique (352) qui présente un axe de rotation Aₛ et qui peut être aligné avec l'axe de rotation Aᵣ, de telle sorte que l'arbre (352) soit disposé dans l'ouverture (344) de la première mâchoire (254) et soit disposé radialement par rapport à la surface cylindrique de la première mâchoire (254), le tampon (248) comprenant:
une première surface (348) qui est de forme sphérique et qui engage de façon rotative la surface de forme sphérique du deuxième appendice (296) et à partir de laquelle l'arbre (352) s'étend,
une deuxième surface (250) présentant deux points sur la deuxième surface qui, avec le point sur la surface du premier côté, définissent un plan dans les conditions de fonctionnement qui s'étend latéralement et qui est sensiblement parallèle à la surface de chemin d'écoulement du carénage, la deuxième surface (250) présentant un contour qui coïncide étroitement avec le contour de la surface de chemin d'écoulement du carénage et qui adapte le tampon pour engager la surface de chemin d'écoulement du carénage, et qui s'étend latéralement au-delà de l'emplacement de face dure du carénage et au-delà du carénage, de telle sorte que le tampon dans la position engagée bloque l'écoulement de la matière en fusion vers la surface de chemin d'écoulement du carénage;
dans laquelle les mâchoires (254, 264) de l'ensemble sont adaptées pour engager le carénage de la pale de rotor, et l'élément élastique (272) pousse les mâchoires contre la surface de chemin d'écoulement et la surface de chemin sans écoulement du carénage pour supporter et positionner le tampon à partir du carénage dans les conditions de fonctionnement;
dans laquelle les appendices (282, 296) permettent un ajustement latéral de la première mâchoire (254) par rapport au carénage (10) de la pale de rotor en vue de faciliter l'engagement entre le tampon et la surface de chemin d'écoulement du carénage et de permettre l'engagement du carénage sans qu'une structure s'étende entre la surface portante et le carénage et latéralement vers l'extérieur du tampon;
dans laquelle la tampon (248) peut tourner autour de l'axe Aₛ, et où l'axe Aₛ peut être incliné par l'intermédiaire de l'engagement des surfaces sphériques sur le tampon et le deuxième appendice (296) afin de permettre à la deuxième surface du carénage de supporter des variations mineures de l'orientation du carénage par rapport à la fixation, et de permettre à la deuxième surface d'engager la surface de chemin d'écoulement du carénage;
dans laquelle au moins la partie du tampon (248) qui est située à proximité de la deuxième surface est constituée d'une matière dont la conductivité thermique est au moins quatre fois supérieure à la conductivité thermique de la matière en fusion et du carénage aux températures de fonctionnement de manière à conduire la chaleur loin de la matière en fusion située à proximité de la ligne de contact entre le carénage et le tampon afin de refroidir la matière en fusion située à la ligne de contact pour entraîner la matière en fusion à devenir plus visqueuse à cet endroit dans le but de bloquer la fuite de matière en fusion vers la surface de chemin d'écoulement du carénage; et
dans laquelle le tampon (248) présente une capacitance thermique qui est inférieure à la capacitance thermique du carénage de manière à éviter que le tampon (248) agisse comme un puits thermique et fissure la matière en fusion pendant le refroidissement de celle-ci.

23. En combinaison, pale de rotor (10) comprenant un emplacement de face de carénage (38) et fixation à utiliser pour disposer une région de matière à l'emplacement de face de carénage (38) de la pale de rotor (10), la pale de rotor (10) étant disposée autour d'un axe dans le sens de l'envergure, la pale de rotor présentant une première extrémité comprenant une section de pied (24), une section de surface portante (35) qui s'étend dans le sens de l'envergure, et une deuxième extrémité comprenant un carénage (12) qui s'étend latéralement par rapport à la section de surface portante, le carénage comprenant un emplacement de face de carénage (38) et un substrat destiné à recevoir la matière durcie à proximité de l'emplacement de face de carénage sous forme fondue, la fixation comprenant:
une base (54) pour engager la pale de rotor (10);
un tampon (48) présentant un contour qui adapte le tampon pour engager la surface de chemin d'écoulement du carénage, le contour de surface (50) étant adapté pour s'étendre latéralement au-delà de l'emplacement de face dure du carénage et au-delà du carénage, de telle sorte que le tampon dans la position engagée bloque l'écoulement de la matière en fusion vers la surface de chemin d'écoulement du carénage; et
un ensemble (52) pour pousser le tampon (48) en engagement avec la surface de chemin d'écoulement (42) du carénage.

24. Combinaison selon la revendication 23, dans laquelle le tampon (48) est monté de façon rotative par rapport à l'ensemble (52).

25. Combinaison selon la revendication 23 ou 24, dans laquelle l'ensemble pour pousser le tampon (48) en engagement avec le carénage du chemin d'écoulement comprend un boîtier (52) comprenant un passage (102), un élément élastique (112) disposé dans le passage (102) présentant une première extrémité qui engage le boîtier (52), et une deuxième extrémité qui est adaptée pour engager une barre (118) disposée dans le passage (102) qui engage l'élément élastique (112), la barre (118) étant fixée au tampon (48) pour pousser le tampon en engagement avec la surface de chemin d'écoulement (42) du carénage.

26. Combinaison selon la revendication 25, dans laquelle la barre (118) présente une première extrémité qui engage l'élément élastique (112), et une deuxième extrémité qui s'étend au-delà du passage comprenant un canal (126) qui adapte la barre pour recevoir de façon coulissante un bras (128) qui s'étend à travers le canal (126) dans la barre (118) et qui présente une extrémité espacée de la barre (118) qui est fixée au tampon (48).

27. Combinaison selon l'une quelconque des revendications 23 à 26, dans laquelle la base (54) comprend un passage (56) qui adapte la base pour recevoir la première extrémité de la pale de rotor.

28. Combinaison selon l'une quelconque des revendications 23 à 27, dans laquelle la fixation comprend un ensemble de mise à la masse comprenant une masse (96) qui est adaptée pour engager la section de pied de la pale de rotor, et des moyens (98) pour pousser la masse (96) et la pale de rotor (10) en contact bout à bout.

29. Combinaison selon la revendication 23, à utiliser pour disposer une région de matière durcie à l'emplacement de face d'encoche (38) pour une pale de rotor (10), la pale de rotor étant disposée autour d'un axe dans le sens de l'envergure présentant une première extrémité comprenant une section de pied (24) et une section de plate-forme (26), la section de plate-forme (26) présentant un premier côté et un deuxième côté qui s'étendent latéralement par rapport à l'axe dans le sens de l'envergure, comprenant une section de surface portante (35) qui s'étend dans le sens de l'envergure et qui présente une deuxième extrémité comprenant un carénage qui s'étend latéralement par rapport à la section de surface portante (35), le carénage comprenant un emplacement de face d'encoche et un substrat destiné à recevoir la matière durcie à proximité de l'emplacement de face d'encoche sous forme fondue, la combinaison comprenant:
ladite base (54) comprenant un passage (56) qui adapte la base pour recevoir la première extrémité de la pale de rotor (10), la base comprenant en outre:
une première surface (60) orientée vers l'extérieur et définissant une partie du passage (56),
une deuxième surface (62) orientée vers l'extérieur et définissant une partie du passage (56),
une ouverture du passage (56) qui s'étend vers l'intérieur à partir de la première surface et de la deuxième surface, et qui adapte la base pour recevoir la section de pied (24) de la pale de rotor (10),
une pince (64) comprenant une paire de bras (66, 68) qui s'étendent latéralement, les bras étant espacés et créant un espace (G) entre eux, l'espace (G) -adaptant la pince pour qu'elle s'étende de part et d'autre de la surface portante,
chacun des bras (66, 68) comportant une saillie (72, 74) qui s'étend à partir du bras et qui adapte la pince pour engager un des côtés de la section de plate-forme (26) d'une pale de rotor dans les conditions de fonctionnement afin de coincer la section de plate-forme entre les bras de la pince et les première et deuxième surfaces orientées vers l'extérieur de l'ouverture,
un écarteur (84) présentant une première extrémité (86) qui engage les bras de la pince, et une deuxième extrémité (88) qui est adaptée pour engager la tête d'une vis (76), l'écarteur comportant en outre une ouverture qui s'étend à partir de la première extrémité jusqu'à la deuxième extrémité de l'écarteur qui adapte l'écarteur pour recevoir une tige (78) de la vis de fixation (76),
la vis de fixation (76) comprenant une tige (78) qui engage de façon vissée la base pour pousser les bras (72, 74) de la pince (64) contre la section de plate-forme de la pale de rotor, la vis de fixation (76) comprenant une tête (82) qui engage une extrémité de l'écarteur pour pousser l'écarteur contre les bras de la pince,
un canal (92) qui s'étend vers l'intérieur à partir de l'ouverture et qui est adapté pour recevoir un bloc de mise à la masse (96);
un ensemble de masse (94) comprenant:
un bloc de mise à la masse (96) disposé dans le canal (92) et qui est adapté pour engager la section de pied (24) de la pale de rotor,
un élément élastique (98) qui est adapté dans les conditions de fonctionnement pour exercer une force contre le bloc de mise à la masse (96) pour pousser le bloc de mise à la masse en contact bout à bout avec l'élément de pale de rotor (10),
ledit ensemble (52) étant un ensemble de boîtier (52) pour pousser un ensemble de tampon en engagement avec la surface de chemin d'écoulement de la section de carénage, l'ensemble de boîtier comprenant:
un boîtier comprenant un passage (102) présentant une première extrémité (104) qui est adaptée pour engager un élément élastique (112) et une deuxième extrémité présentant une ouverture qui adapte la passage pour recevoir une barre (118),
un élément élastique (112) disposé dans le passage (102), présentant une première extrémité qui engage la première extrémité (104) du passage (102) et une deuxième extrémité qui est adaptée pour engager une barre (118),
une barre (118) disposée dans le passage (102) et présentant une première extrémité (122) qui engage l'élément élastique (112), et une deuxième extrémité qui s'étend au-delà du passage et comprenant un canal (126) qui adapte la barre (118) pour recevoir un bras (128),
un bras (128) qui s'étend à travers le canal (126) dans la barre pour engager de façon coulissante la barre (118) et qui présente une extrémité espacée de la barre, l'extrémité comportant une ouverture (142) définie par une première surface (144) qui présente le contour d'une partie d'une sphère, et une surface cylindrique disposée autour d'un axe Aᵣ, l'axe Aᵣ s'étendant à travers le centre de la sphère,
une vis de fixation (132) qui engage de façon vissée la barre (118) et qui s'étend jusqu'au canal (126) pour exercer une force sur le bras (126) afin d'empêcher le bras de se déplacer,
ledit tampon (48) comprenant un arbre cylindrique (152) qui présente un axe de rotation Aₛ et qui peut être aligné avec l'axe de rotation Aᵣ, de telle sorte que l'arbre (152) soit disposé dans l'ouverture et soit espacé radialement de la surface cylindrique du bras (128), le tampon (48) comprenant:
une première surface (148) à partir de laquelle le bras (152) s'étend, la première surface présentant le contour d'une partie d'une sphère et qui engage de façon rotative la surface de forme sphérique du bras (128);
une deuxième surface (50) qui présente un contour qui coïncide étroitement avec le contour de la surface de chemin d'écoulement du carénage et qui adapte le tampon (48) pour engager la surface de chemin d'écoulement (42) du carénage, et qui s'étend latéralement au-delà de l'emplacement de face dure du carénage et au-delà du carénage, de telle sorte que le tampon (48) dans la position engagée bloque l'écoulement de la matière en fusion vers la surface de chemin d'écoulement du carénage;
dans laquelle l'élément élastique (98) pousse la barre (118) vers l'extérieur et contre la surface de chemin d'écoulement du carénage de manière à accepter des différences de hauteur entre des pales de rotor;
dans laquelle la vis de fixation (132) engage le bras (128) de manière à permettre un ajustement latéral du bras par rapport au carénage de la pale de rotor;
dans laquelle le tampon (48) peut tourner autour de l'axe Aₛ, et où l'axe Aₛ peut être incliné par l'intermédiaire de l'engagement des surfaces sphériques sur le tampon (48) et le bras (128) afin de permettre à la deuxième surface du carénage de supporter des variations mineures de l'orientation du carénage par rapport à la fixation, et de permettre à là deuxième surface d'engager la surface de chemin d'écoulement du carénage;
dans laquelle au moins la partie du tampon (48) qui est située à proximité de la deuxième surface est constituée d'une matière dont la conductivité thermique est au moins quatre fois supérieure à la conductivité thermique de la matière en fusion et du carénage aux températures de fonctionnement de manière à conduire la chaleur loin de la matière en fusion située à proximité de la ligne de contact entre le carénage et le tampon afin de refroidir la matière en fusion située à la ligne de contact pour entraîner la matière en fusion à devenir plus visqueuse à cet endroit dans le but de bloquer la fuite de matière en fusion vers la surface de chemin d'écoulement du carénage; et
dans laquelle le tampon (48) présente une capacitance thermique qui est inférieure à la capacitance thermique du carénage dans le but d'éviter que le tampon agisse comme un puits thermique et fissure la matière en fusion pendant le refroidissement de celle-ci.

30. Combinaison selon l'une quelconque des revendications 14 à 29, dans laquelle le tampon (48; 248; 248a) est un tampon de métal.

31. Combinaison selon la revendication 30, dans laquelle le tampon (48; 248; 248a) est constitué de tungstène.

32. Combinaison selon l'une quelconque des revendications 13 à 31, dans laquelle le tampon (48; 248; 248a) est constitué d'une matière dont le point de fusion est supérieur au point de fusion de la matière de carénage et de la matière de face dure.

33. Combinaison selon la revendication 32, dans laquelle le tampon (48; 248; 248a) est constitué d'une matière dont le point de fusion est au moins trois fois plus élevé que le point de fusion de la matière de carénage et de la matière de face dure.

34. Combinaison selon l'une quelconque des revendications 14 à 33, dans laquelle au moins la partie du tampon (48; 248; 248a) qui est situées à proximité du substrat est constituée d'une matière dont la conductivité thermique est supérieure à la conductivité thermique de la matière en fusion et du carénage aux températures de fonctionnement.

35. Combinaison selon la revendication 34, dans laquelle la matière du tampon (48; 248; 248a) présente une conductivité thermique au moins quatre fois plus élevée que celle de la matière en fusion et du carénage aux températures de fonctionnement.

36. Combinaison selon l'une quelconque des revendications, 13 à 35, dans laquelle le tampon (48; 248; 248a) présente une capacitance thermique qui est inférieure à la capacitance thermique du carénage dans le but d'éviter que le tampon agisse comme un puits thermique et fissure la matière en fusion pendant le refroidissement de celle-ci.
